# EUROPÄISCHE PATENTANMELDUNG

(11) **EP 3 896 827 A1**
(43) Veröffentlichungstag der Anmeldung: **20.10.2021**
(21) Anmeldenummer: 20170127.3
(22) Anmeldetag: 17.04.2020
(51) Int. Cl.: H02K 41/02

(54) **VERFAHREN ZUM STEUERN EINES PLANARANTRIEBSSYSTEMS UND PLANARANTRIEBSSYSTEM**

(71) Anmelder: Beckhoff Automation GmbH, 33415 Verl (DE)
(72) Erfinder: BENTFELD, Lukas, 33129 Delbrück (DE); BECKHOFF, Johannes, 33758 Schloß Holte-Stukenbrock (DE)
(74) Vertreter: Patentanwaltskanzlei WILHELM & BECK

(57) **Zusammenfassung**

Die Erfindung betrifft ein Verfahren (100) zum Steuern eines Planarantriebssystems (200), umfassend:
Identifizieren einer Statormodulvorzugsrichtung (315) des Statormoduls (300) mit der Magnetfeldvorzugsrichtung (319) oder der Sensorvorzugsrichtung (443) und Identifizieren einer Läufervorzugsrichtung (441) des Läufers (400) mit der jeweils anderen der Magnetfeldvorzugsrichtung (319) oder der Sensorvorzugsrichtung (443) in einem Vorzugsrichtungsidentifikationsschritt (101);
Stellen des Orientierungsmagnetfelds durch die Magneteinrichtung (419) in einem Magnetfeldstellungsschritt (103); Aufnehmen wenigstens eines Messwerts des Orientierungsmagnetfelds durch die Magnetfeldsensoreinrichtung in einem Magnetfeldbestimmungsschritt (105);
Bestimmen einer Ausrichtung der Läufervorzugsrichtung (441) relativ zur Statormodulvorzugsrichtung (315) auf Basis des gemessenen Werts der Komponente des Orientierungsmagnetfels parallel zur Sensorvorzugsrichtung (443) in einem Ausrichtungsbestimmungsschritt (107);
Bestimmen einer ersten Orientierung des Läufers (400) auf dem Statormodul (300) auf Basis der Ausrichtung der Läufervorzugsrichtung (441) relativ zur Statormodulvorzugsrichtung (315) in einem Orientierungsbestimmungsschritt (109).

Die Erfindung betrifft ferner ein Planarantriebssystem (200).

## Beschreibung

Die Erfindung betrifft ein Verfahren zum Steuern eines Planarantriebssystems und ein Planarantriebssystem, das eingerichtet ist, das Verfahren zum Steuern eines Planarantriebssystems auszuführen.

Planarantriebssysteme können unter anderem in der Automatisierungstechnik, insbesondere der Fertigungstechnik, der Handhabungstechnik und der Verfahrenstechnik eingesetzt werden. Mittels Planarantriebssystemen kann ein bewegliches Element einer Anlage oder Maschine in mindestens zwei linear unabhängigen Richtungen bewegt oder positioniert werden. Planarantriebssysteme können einen permanenterregten elektromagnetischen Planarmotor mit einem planaren Stator und einem auf dem Stator in mindestens zwei Richtungen beweglichen Läufer umfassen.

Bei einem permanenterregten elektromagnetischen Planarmotor wird dadurch eine Antriebskraft auf den Läufer ausgeübt, dass stromdurchflossene Leiter mit Antriebsmagneten einer Magnetanordnung magnetisch wechselwirken. Die Erfindung betrifft insbesondere Ausgestaltungen von Planarantriebssystemen, bei denen die Antriebsmagneten eines elektrischen Planarmotors an dem Läufer und die stromdurchflossenen Leiter des Planarmotors in einem ortsfest angeordneten planaren Stator angeordnet sind.

Bei einem derartigen Antriebssystem umfasst der Läufer mindestens eine erste Magneteinheit für den Antrieb des Läufers in eine erste Richtung und eine zweite Magneteinheit für den Antrieb des Läufers in eine von der ersten Richtung linear unabhängige, beispielsweise in eine zu der ersten Richtung orthogonale, zweite Richtung. Der planare Stator umfasst mindestens eine Gruppe erster bestrombarer Leiter, welche mit den Magneten der ersten Magneteinheit magnetisch wechselwirken, um den Läufer in die erste Richtung anzutreiben, sowie eine Gruppe zweiter bestrombarer Leiter, welche mit den Magneten der zweiten Magneteinheit magnetisch wechselwirken, um den Läufer in die zweite Richtung anzutreiben. Die ersten und zweiten Gruppen von Leitern sind in der Regel unabhängig voneinander bestrombar, um voneinander unabhängige Bewegungen des Läufers in die erste und zweite Richtung zu ermöglichen. Sind die Leiter der ersten und zweiten Gruppe selbst zumindest in Teilen unabhängig voneinander bestrombar, können auf einem Stator zeitgleich mehrere Läufer unabhängig voneinander bewegt werden.

Zur Steuerung eines Läufers eines Planarantriebssystems ist es maßgeblich, eine Position des Läufers relativ zu dem Statormodul beziehungsweise zu den Statormodulen des Planarantriebssystems bestimmen zu können. Hierzu weist jedes Statormodul wenigstens ein Sensormodul mit einer Mehrzahl von Magnetfeldsensoren auf, die eingerichtet sind, das Magnetfeld des Läufers zu detektieren, wodurch eine Positionsbestimmung des Läufers relativ zu dem jeweiligen Sensormodul beziehungsweise relativ zu dem jeweiligen Statormodul ermöglicht wird. Je präziser eine solche Bestimmung einer Position des Läufers durchgeführt werden kann, desto präziser kann eine Steuerung des Planarantriebssystems erfolgen.

Neben einer Positionsbestimmung, die primär eine Translationsbewegung des Läufers erfasst, ist für eine präzise Steuerung des Läufers eine Bestimmung einer Orientierung des Läufers relativ zum Statormodul vorteilhaft. Eine Bestimmung der Orientierung erfasst hierbei primär eine Rotation des Läufers um eine zu einer Statoroberfläche des Statormoduls senkrecht orientierte und durch ein geometrisches Zentrum des Läufers verlaufende Rotationsachse.

Eine Bestimmung der Orientierung des Läufers relativ zum Statormodul ist insbesondere dann von Interesse, wenn aufgrund des jeweiligen Einsatzgebiets des Planarantriebssystems eine Vorzugsorientierung des Läufers existiert, beispielsweise weil die durch den Stator zu transportierenden Werkstücke mit einer Vorzugsorientierung zu transportieren sind.

Darüber hinaus ermöglicht eine Bestimmung der Orientierung des Läufers relativ zum Statormodul eine verbesserte Präzision der Positionsbestimmung des Läufers auf dem Statormodul. Insbesondere für den Fall, dass eine Positionsbestimmung auf Basis einer exakten Kenntnis des Läufermagnetfelds jedes einzelnen Läufers vorgenommen wird, kann eine exakte Bestimmung der Orientierung des Läufers relativ zum Statormodul vorteilhaft sein. Durch die exakte Kenntnis der Orientierung des Läufers relativ zum Statormodul können durch die Magnetfeldsensoren zur Positionsbestimmung des Läufers aufgenommenen Werte des Läufermagnetfelds besser interpretiert werden, was zu einer verbesserten Präzision der Positionsbestimmung führt.

Eine Bestimmung einer Orientierung des Läufers relativ zum Statormodul ist insbesondere dann anspruchsvoll, wenn, wie im Fall der vorliegenden Erfindung, der Läufer, und insbesondere die Magnetanordnung des Läufers, in Bezug auf die senkrecht zur Statoroberfläche des Statormoduls orientierte Rotationsachse rotationssymmetrisch ist. Erfindungsgemäß ist der Läufer und insbesondere die Magnetanordnung des Läufers und das hierdurch generierte Läufermagnetfeld rotationssymmetrisch bezüglich einer Rotation um die senkrecht zur Statoroberfläche orientierte Rotationsachse um 90°, 180° und 270°, sodass der Läufer und das Läufermagnetfeld durch eine Rotation um 90°, 180° oder 270° und offensichtlich 0° und 360° ineinander überführbar sind. Auf Basis der Ausgestaltung des Läufers, der Magnetanordnung und des durch diese generierten Läufermagnetfelds ist eine Orientierung von 90°, 180° oder 270° nicht von einer Orientierung von 0° unterscheidbar.

Es ist daher eine Aufgabe der Erfindung, ein Verfahren zum Steuern eines Planarantriebssystems bereitzustellen, das aufgrund einer verbesserten Orientierungsbestimmung eines Läufers ein verbessertes und präziseres Steuern des Läufers ermöglicht. Eine weitere Aufgabe der Erfindung ist es, ein Planarantriebssystem bereitzustellen, das eingerichtet ist, das erfindungsgemäße Verfahren auszuführen.

Die Aufgaben werden durch ein Verfahren zum Steuern eines Planarantriebssystems und ein Planarantriebssystem gemäß den unabhängigen Ansprüchen gelöst. Bevorzugte Ausführungsformen sind in den abhängigen Ansprüchen angegeben.

Nach einem Aspekt der Erfindung wird ein Verfahren zum Steuern eines Planarantriebssystems bereitgestellt, wobei das Planarantriebssystem wenigstens eine Steuereinheit, ein Statormodul mit einer Statoroberfläche und einen auf der Statoroberfläche positionierbaren Läufer umfasst, wobei das Statormodul eingerichtet ist, zum elektrischen Steuern des Läufers entlang der Statoroberfläche Statormagnetfelder zu generieren, wobei der Läufer eine Magnetanordnung zum Generieren eines Läufermagnetfelds aufweist, wobei über die Statormagnetfelder und das Läufermagnetfeld eine magnetische Kopplung zwischen dem Läufer und dem Statormodul erzielbar ist, wobei das Statormodul zum Bestimmen einer Position des Läufers ein Sensormodul mit einer Mehrzahl von Magnetfeldsensoren umfasst, wobei das Statormodul oder der Läufer eine Magneteinrichtung zum Generieren eines Orientierungsmagnetfelds aufweist, wobei das Orientierungsmagnetfeld rotationsasymmetrisch bezüglich einer Rotation um eine zur Statoroberfläche senkrechte Rotationsachse ist und eine Magnetfeldvorzugsrichtung aufweist, und wobei der jeweils andere des Statormoduls und des Läufers eine Magnetfeldsensoreinrichtung mit einer Sensorvorzugsrichtung zum Detektieren des Orientierungsmagnetfelds entlang der Sensorvorzugsrichtung aufweist, umfassend:
Identifizieren einer Statormodulvorzugsrichtung des Statormoduls mit der Magnetfeldvorzugsrichtung oder der Sensorvorzugsrichtung und Identifizieren einer Läufervorzugsrichtung des Läufers mit der jeweils anderen der Magnetfeldvorzugsrichtung oder der Sensorvorzugsrichtung in einem Vorzugsrichtungsidentifikationsschritt, wobei die Statormodulvorzugsrichtung parallel zur Statoroberfläche des Statormoduls orientiert ist, und wobei die Läufervorzugsrichtung parallel zu einer Lauffläche des Läufers orientiert ist;
Stellen des Orientierungsmagnetfelds durch die Magneteinrichtung in einem Magnetfeldstellungsschritt;
Aufnehmen wenigstens eines Messwerts des Orientierungsmagnetfelds durch die Magnetfeldsensoreinrichtung in einem Magnetfeldbestimmungsschritt, wobei der wenigstens eine Messwert des Orientierungsmagnetfelds wenigstens einen Wert einer Komponente des Orientierungsmagnetfelds in einer Richtung parallel zur Sensorvorzugsrichtung umfasst;
Bestimmen einer Ausrichtung der Läufervorzugsrichtung relativ zur Statormodulvorzugsrichtung auf Basis des gemessenen Werts der Komponente des Orientierungsmagnetfels parallel zur Sensorvorzugsrichtung in einem Ausrichtungsbestimmungsschritt;
Bestimmen einer ersten Orientierung des Läufers auf dem Statormodul auf Basis der Ausrichtung der Läufervorzugsrichtung relativ zur Statormodulvorzugsrichtung in einem Orientierungsbestimmungsschritt, wobei eine erste Orientierung des Läufers relativ zum Statormodul in eine zweite Orientierung des Läufers relativ zum Statormodul über eine Rotation des Läufers relativ zum Statormodul um die senkrecht zur Statoroberfläche orientierte und durch ein geometrisches Zentrum des Läufers verlaufende Rotationsachse überführbar ist.

Hierdurch wird der technische Vorteil erreicht, dass ein Verfahren zum Steuern eines Planarantriebssystems bereitgestellt werden kann, das geeignet ist, eine Orientierung eines Läufers des Planarantriebssystems relativ zu einem Statormodul des Planarantriebssystems zu bestimmen.

Eine Orientierung des Läufers relativ zum Statormodul ist im Sinne der Anmeldung über eine Ausrichtung einer Läufervorzugsrichtung relativ zu einer Statormodulvorzugsrichtung gegeben. Eine erste Orientierung des Läufers relativ zum Statormodul kann in eine zweite Orientierung des Läufers relativ zum Statormodul über eine Rotation des Läufers um eine senkrecht zu einer Statoroberfläche des Statormoduls verlaufende und durch ein geometrisches Zentrum des Läufers verlaufende Rotationsachse überführt werden.

Eine Ausrichtung der Läufervorzugsrichtung relativ zur Statormodulvorzugsrichtung kann beispielsweise über einen Winkel zwischen der Läufervorzugsrichtung und der Statormodulvorzugsrichtung ausgedrückt werden.

Eine Läufervorzugsrichtung ist im Sinne der Anmeldung eine beliebig wählbare Richtung des Läufers, mittels welcher eine Rotation des Läufers um die Rotationsachse durch eine entsprechende Neuausrichtung der definierten Läufervorzugsrichtung ermittelbar ist. Die Läufervorzugsrichtung ist beliebig wählbar und dient ausschließlich zur Unterscheidbarkeit verschiedener Orientierungen des Läufers relativ zum Statormodul, insbesondere wenn der Läufer mit einer rotationssymmetrischen Form ausgestaltet ist. Die Läufervorzugsrichtung ist jedoch von der Ausgestaltung des Läufers unabhängig und von dieser losgelöst frei wählbar.

Eine Statormodulvorzugsrichtung ist im Sinne der Anmeldung in diesem Zusammenhang eine beliebig wählbare Richtung parallel zur Statoroberfläche des Statormoduls, über die eine Ausrichtung der Läufervorzugsrichtung und somit eine Orientierung des Läufers relativ zum Statormodul definierbar ist.

Zum Bestimmen einer Orientierung eines Läufers relativ zum Statormodul des Planarantriebssystems weist das Planarantriebssystem eine Magneteinrichtung zum Generieren eines Orientierungsmagnetfelds und eine Magnetfeldsensoreinrichtung zum Detektieren des Orientierungsmagnetfelds auf. Das Orientierungsmagnetfeld ist zur senkrecht zur Statoroberfläche orientierten Rotationsachse rotationsasymmetrisch und weist eine Magnetfeldvorzugsrichtung auf. Die Magnetfeldsensoreinrichtung weist eine Magnetfeldsensorvorzugsrichtung auf und ist eingerichtet, Komponenten des Orientierungsmagnetfelds parallel oder antiparallel zur Sensorvorzugsrichtung zu detektieren.

Zum Bestimmen der Orientierung des Läufers relativ zum Statormodul ist die Magnetfeldeinrichtung entweder am Läufer oder am Statormodul ausgebildet. Die Magnetfeldsensoreinrichtung ist hierbei an der jeweils anderen Komponente des Planarantriebssystems, sprich: entweder an dem Statormodul oder dem Läufer ausgebildet.

Durch Identifikation der Sensorvorzugsrichtung mit der Läufervorzugsrichtung oder der Statormodulvorzugsrichtung, je nachdem ob die Magnetfeldsensoreinrichtung am Läufer oder am Statormodul ausgebildet ist, und nach Identifikation der Magnetfeldvorzugsrichtung mit der Läufervorzugsrichtung oder der Statormodulvorzugsrichtung, je nachdem ob die Magnetfeldeinrichtung am Läufer oder am Statormodul ausgebildet ist, kann über das Aufnehmen von Messwerten einer Komponente des Orientierungsmagnetfelds parallel oder antiparallel zur Sensorvorzugsrichtung durch die Magnetfeldsensoreinrichtung eine Ausrichtung der Sensorvorzugsrichtung relativ zur Magnetfeldvorzugsrichtung und damit verbunden eine Ausrichtung der entsprechenden Läufervorzugsrichtung relativ zur Statormodulvorzugsrichtung bestimmt werden. Auf Basis der ermittelten Ausrichtung der Läufervorzugsrichtung relativ zur Statormodulvorzugsrichtung kann eine Orientierung des Läufers relativ zum Statormodul bestimmt werden.

Hierdurch kann insbesondere der Vorteil erreicht werden, dass bei einem rotationssymmetrisch ausgestalteten Läufer, der insbesondere durch Rotationen um 90°, 180° oder 270° in sich überführbar ist, eine Orientierung relativ zum Statormodul, die eine entsprechende Rotation um 90°, 180° oder 270° umfasst, bestimmt werden kann. Hierdurch ist eine eindeutige Bestimmung der Orientierung des Läufers relativ zum Statormodul möglich, wodurch eine effektive Steuerung des Läufers ermöglicht ist.

Nach einer Ausführungsform umfasst das Verfahren ferner: Bestimmen einer Position des Läufers relativ zum Statormodul durch Aufnehmen einer Mehrzahl von Messwerten des Läufermagnetfelds des Läufers durch Magnetfeldsensoren des Sensormoduls des Statormoduls in einem Positionsbestimmungsschritt, wobei eine erste Position des Läufers relativ zum Statormodul in eine zweite Position des Läufers relativ zum Statormodul über eine Translation des geometrischen Zentrums des Läufers relativ zum Statormodul in einer zur Rotationsachse senkrecht verlaufenden Translationsrichtung überführbar ist.

Hierdurch wird der technische Vorteil erreicht, dass eine effektive Steuerung des Planarantriebssystem bereitgestellt werden kann. Die Bestimmung der Position des Läufers auf dem Statormodul ermöglicht eine direkte Ansteuerung des Läufers durch entsprechende Statorleiter des Statormoduls. Darüber hinaus ermöglicht eine Positionsbestimmung eine Auswahl derjenigen Magnetfeldsensoren des Sensormoduls des Statormoduls, die in direkter Nachbarschaft zum Läufer positioniert sind und somit für eine weitere Steuerung und weitere Positionsbestimmungen des Läufers benötigt werden.

Nach einer Ausführungsform umfasst das Verfahren ferner: Stellen eines Arretiermagnetfelds durch das Statormodul zum Arretieren des Läufers in einer Position in einem Arretierschritt, wobei das Arretiermagnetfeld dem Läufermagnetfeld gegenpolig ausgerichtet ist, sodass eine anziehende magnetische Kopplung zwischen dem Arretiermagnetfeld und dem Läufermagnetfeld erzeugt wird.

Hierdurch wird der technische Vorteil erreicht, dass eine präzise Bestimmung der Orientierung des Läufers relativ zum Statormodul erreicht werden kann. Durch Arretieren des Läufers in der bestimmten Position relativ zum Statormodul wird eine weitere Bewegung des Läufers relativ zum Statormodul während der Bestimmung der Orientierung vermieden. Hierdurch wird eine präzisere Orientierungsbestimmung des Läufers relativ zum Statormodul erreicht. Darüber hinaus kann eine magnetische Kopplung zwischen dem zur Orientierungsbestimmung benötigten Orientierungsmagnetfeld mit entweder dem Läufermagnetfeld des Läufers oder dem Statormagnetfeld des Statormoduls, was zu einer Bewegung des Läufers relativ zum Statormodul führen würde, vermieden werden.

Nach einer Ausführungsform umfasst das Verfahren ferner: Orientieren des Läufers von der ersten Orientierung in eine zweite Orientierung auf Basis der Ausrichtung der Läufervorzugsrichtung relativ zur Statormodulvorzugsrichtung in einem Orientierungsschritt.

Hierdurch wird der technische Vorteil erreicht, dass eine präzise Steuerung des Planarantriebssystems bereitgestellt werden kann. Nach Bestimmung der Orientierung des Läufers relativ zum Statormodul kann eine Änderung der Orientierung des Läufers relativ zum Statormodul erreicht werden. Insbesondere für Anwendungen, in denen eine bestimmte Orientierung des Läufers relativ um Statormodul, beispielsweise durch eine vorgegebene Orientierung der durch den Läufer zu transportierenden Werkstücke, ist eine Änderung der Orientierung des Läufers relativ zum Statormodul vorteilhaft. Hierdurch ist eine präzise und breit einsetzbare Steuerung des Planarantriebssystems erreicht.

Nach einer Ausführungsform sind die Magneteinrichtung am Statormodul und die Magnetfeldsensoreinrichtung am Läufer ausgebildet, wobei die Statormodulvorzugsrichtung mit der Magnetfeldvorzugsrichtung und die Läufervorzugsrichtung mit der Sensorvorzugsrichtung identifiziert sind, wobei die Magnetfeldsensoreinrichtung wenigstens einen 2D-Hallsensor oder 3D-Hallsensor umfasst, wobei die Sensorvorzugsrichtung der Magnetfeldsensoreinrichtung durch einen Messkanal des Hallsensors definiert ist, und wobei die Magneteinrichtung durch eine Statoreinheit des Statormoduls zum Generieren der Statorfelder zum Antreiben des Läufers gebildet ist.

Hierdurch wird der technische Vorteil erreicht, dass ein effizientes Verfahren zum Steuern des Planarantriebssystems bereitgestellt werden kann. Durch die Ausbildung der Magnetfeldsensoreinrichtung am Läufer in Form von wenigstens einem 2D- oder 3D-Hallsensor und der Ausbildung der Magneteinrichtung am Statormodul in Form einer Statoreinheit bzw. einer Mehrzahl von Statorleitern der Statoreinheit des Statormoduls wird erreicht, dass zum Erzeugen des Orientierungsmagnetfelds die Statorleiter bzw. die Statoreinheit des Statormoduls verwendet werden kann, die zum Erzeugen des Statorfelds zum Steuern des Läufers dient.

Das Orientierungsmagnetfeld kann somit über die Steuereinheit des Planarantriebssystems durch Ansteuern des Statormoduls erzielt werden. Eine zusätzliche Komponente des Planarantriebssystems zum Bereitstellen der Magnetfeldeinrichtung kann somit vermieden werden und die Ansteuerung zum Generieren des Orientierungsmagnetfelds kann über die bereits implementierte Steuereinheit erreicht werden. Darüber hinaus kann über das Ausbilden des wenigstens einen 2D- bzw. 3D-Hallsensors am Läufer eine verlässliche und präzise Bestimmung des Orientierungsmagnetfelds durch die Magnetfeldsensoreinrichtung erreicht werden. Ferner ist wenigstens durch einen Messkanal des Hall-Sensors die Sensorvorzugsrichtung klar definiert.

Ein Messkanal des Hall-Sensors ist im Sinne der Anmeldung ein X-, Y- oder Z-Messkanal des 2D- oder 3D-Hallsensors. Nach einer Ausführungsform umfasst das Verfahren ferner:
Bestimmen einer Mehrzahl von Werten des Orientierungsmagnetfelds für eine Mehrzahl verschiedener Ausrichtungen der Läufervorzugsrichtung relativ zur Statormodulvorzugsrichtung in einem Bestimmungsschritt; und
Bestimmen einer Relation zwischen einem Wert des Orientierungsmagnetfelds und einer Ausrichtung der Läufervorzugsrichtung relativ zur Statormodulvorzugsrichtung auf Basis der Mehrzahl von Werten des Orientierungsmagnetfelds für die Mehrzahl verschiedener Ausrichtungen der Läufervorzugsrichtung relativ zur Statormodulvorzugsrichtung in einem Relationsbestimmungsschritt;
wobei der Ausrichtungsbestimmungsschritt umfasst:
   Vergleichen des gemessenen Werts der Komponente des Orientierungsmagnetfelds parallel zur Sensorvorzugsrichtung mit der Relation zwischen einem Wert des Orientierungsmagnetfels und einer Ausrichtung der Läufervorzugsrichtung relativ zur Statormodulvorzugsrichtung in einem Vergleichsschritt.

Hierdurch wird der technische Vorteil erreicht, dass ein präzises und effizientes Verfahren zur Steuerung des Planarantriebssystems bereitgestellt werden kann. Hierzu wird auf Basis einer Mehrzahl von Werten des Orientierungsmagnetfelds, die für eine Mehrzahl verschiedener Ausrichtungen der Läufervorzugsrichtung relativ zur Statormodulvorzugsrichtung aufgenommen werden, eine Relation zwischen dem Wert des Orientierungsmagnetfelds und einer Ausrichtung der Läufervorzugsrichtung relativ zur Statormodulvorzugsrichtung generiert. Diese Relation zwischen einem Wert des Orientierungsmagnetfelds und einer entsprechenden Ausrichtung der Läufervorzugsrichtung relativ zur Statormodulvorzugsrichtung, die mit einer entsprechenden Orientierung des Läufers relativ zum Statormodul korrespondiert, kann zum Bestimmen einer Ausrichtung der Läufervorzugsrichtung relativ zur Statormodulvorzugsrichtung, die zur Steuerung des Planarantriebssystems im Ausrichtungsbestimmungsschritt durchgeführt wird, ein hierzu gemessener Wert der Komponente des Orientierungsmagnetfelds, die parallel zur Sensorvorzugsrichtung der Magnetfeldsensoreinrichtung orientiert ist, mit entsprechenden Werten des Orientierungsmagnetfelds gemäß der bestimmten Relation zwischen Orientierungsmagnetfeld und Ausrichtung der Läufervorzugsrichtung verglichen werden und auf Basis der Relation zwischen dem Wert des Orientierungsmagnetfelds und einer entsprechenden Ausrichtung der Läufervorzugsrichtung relativ zur Statormodulvorzugsrichtung eine für den gemessenen Wert des Orientierungsmagnetfelds entsprechende Ausrichtung der Läufervorzugsrichtung bestimmt werden.

Eine Relation zwischen Werten des Orientierungsmagnetfelds und verschiedenen Orientierungen des Läufers relativ zum Statormodul kann beispielsweise in einer entsprechenden Look-up-Tabelle gespeichert sein. Alternativ kann eine Relation in einer enstsprechenden mathematischen Funktion ausgedrückt sein, die eine eindeutige Zuordnung zwischen Werten des Orientierungsmagnetfelds und verschiedenen Orientierungen des Läufers beschreibt.

Hierdurch kann eine einfache und präzise Bestimmung der Ausrichtung der Läufervorzugsrichtung relativ zur Statormodulvorzugsrichtung und damit verbunden einer Orientierung des Läufers relativ zum Statormodul auf Basis von aufgenommenen Messwerten des Orientierungsmagnetfelds erreicht werden.

Nach einer Ausführungsform umfasst der Bestimmungsschritt:
Aufnehmen einer Mehrzahl von Messwerten von Komponenten des Orientierungsmagnetfelds parallel zu Sensorvorzugsrichtungen der Magnetfeldsensoreinrichtung für eine Mehrzahl verschiedener Ausrichtungen der Läufervorzugsrichtung relativ zur Statormodulvorzugsrichtung durch die Magnetfeldsensoreinrichtung in einem Messschritt; oder
Berechnen der Mehrzahl von Werten von Komponenten des Orientierungsmagnetfelds parallel zu Sensorvorzugsrichtungen der Magnetfeldsensoreinrichtung für die Mehrzahl verschiedener Ausrichtungen der Läufervorzugsrichtung relativ zur Statormodulvorzugsrichtung auf Basis einer Modellbeschreibung des Orientierungsmagnetfelds in einem Simulationsschritt.

Hierdurch wird der technische Vorteil erreicht, dass eine präzise und zuverlässige Bestimmung der Orientierung des Läufers relativ zum Statormodul erreicht werden kann. Hierzu wird zur Bestimmung der Relation zwischen einem zu erwartenden Messwert des Orientierungsmagnetfelds für eine bestimmte Ausrichtung der Läufervorzugsrichtung relativ zur Statormodulvorzugsrichtung, sprich: einer bestimmten Orientierung des Läufers relativ zum Statormodul, für eine Mehrzahl verschiedener Orientierungen des Läufers relativ zum Statormodul eine Mehrzahl von Messwerten einer Komponente des Orientierungsmagnetfelds parallel zur Sensorvorzugsrichtung der Magnetfeldsensoreinrichtung für eine Mehrzahl verschiedener Orientierungen des Läufers relativ zum Statormodul bzw. für eine Mehrzahl verschiedener Ausrichtungen der Läufervorzugsrichtung relativ zur Statormodulvorzugsrichtung aufgenommen.

Auf Basis dieser Messwerte können im Folgenden die entsprechende Relation zwischen dem zu erwarten Messwert des Orientierungsmagnetfelds und der dazugehörigen Ausrichtung der Läufervorzugsrichtung relativ zur Statormodulvorzugsrichtung vorgenommen werden. Durch die Messung der Mehrzahl von Messwerten des Orientierungsmagnetfelds für die Mehrzahl verschiedener Orientierungen des Läufers relativ zum Statormodul kann eine präzise und zuverlässige Bestimmung der Relation zwischen dem zu erwartenden Messwert des Orientierungsmagnetfelds und einer entsprechenden Ausrichtung der Läufervorzugsrichtung relativ zur Statormodulvorzugsrichtung und damit verbunden eine Relation zwischen einem erwarteten Wert des Orientierungsmagnetfelds und einer dazugehörigen Orientierung des Läufers relativ zum Statormodul erreicht werden. Hierdurch kann eine präzise und zuverlässige Bestimmung der Orientierung des Läufers bewirkt werden.

Alternativ kann die Mehrzahl von Werten des Orientierungsmagnetfelds für eine Mehrzahl verschiedener Orientierungen des Läufers relativ zum Statormodul durch eine Simulation basierend auf einer Modellbeschreibung des Orientierungsmagnetfelds erreicht werden. Unter Kenntnis der räumlichen Ausgestaltung des Orientierungsmagnetfelds können zu erwartende Messwerte des Orientierungsmagnetfelds für beliebige Orientierungen des Läufers relativ zum Statormodul errechnet werden und auf Basis der errechneten Werte des Orientierungsmagnetfelds eine entsprechende Relation zwischen Orientierungsmagnetfeld und Ausrichtung der Läufervorzugsrichtung relativ zur Statormodulvorzugsrichtung erzielt werden. Dies ermöglicht eine möglichst präzise Bestimmung der Orientierung des Läufers relativ zum Statormodul. Darüber hinaus kann für jeden Läufer des Planarantriebssystems eine individuelle Relation zwischen Orientierungsmagnetfeld und Ausrichtung der Läufervorzugsrichtung relativ zur Statormodulvorzugsrichtung bzw. zwischen Orientierungsmagnetfeld und Orientierung des Läufers relativ zum Statormodul bestimmt werden. Hierdurch können individuelle Eigenschaften einzelner Läufer berücksichtigt werden, sodass eine möglichst präzise und genaue Bestimmung der Orientierung durch die Aufnahme einer Mehrzahl von Messwerten des Orientierungsmagnetfelds erzielt werden kann.

Nach einer Ausführungsform wird das Vergleichen im Vergleichsschritt über ein Näherungsverfahren durchgeführt.

Hierdurch wird der technische Vorteil erreicht, dass eine präzise und zuverlässige Bestimmung der Orientierung des Läufers relativ zum Statormodul erzielt werden kann. Durch das Durchführen eines Näherungsverfahrens zum Bestimmen der Ausrichtung der Läufervorzugsrichtung relativ zur Statormodulvorzugsrichtung im Zuge eines Vergleichs der aufgenommenen Messwerte des Orientierungsmagnetfelds mit der entsprechenden Relation zwischen zu erwartenden Werten des Orientierungsmagnetfelds für beliebige Orientierungen des Läufers relativ zum Statormodul kann erreicht werden, dass für beliebige Werte des Orientierungsmagnetfelds die präziseste Bestimmung der dazugehörigen Orientierung des Läufers relativ zum Statormodul erzielbar ist.

Das Näherungsverfahren kann beispielsweise auf einem Least-Square Verfahren basieren, bei dem ein Unterschied zwischen einem gemessenen Wert der Komponente des Orientierungsmagnetfelds parallel zur Sensorvorzugsrichtung und einem Wert des Orientierungsmagnetfelds für eine bestimmte Ausrichtung der Läufervorzugsrichtung relativ zur Statormodulvorzugsrichtung gemäß der Relation minimiert wird, und damit der entsprechende Wert des Orientierungsmagnetfelds der Relation bestimmt wird. Auf Basis der Relation ist darauf basierend eine dem Messwert des Orientierungsmagnetfelds entsprechende Orientierung des Läufers relativ zum Statormodul bestimmbar.

Insbesondere wenn die Relation eine Look-up Tabelle umfasst, in der Werten des Orientierungsmagnetfelds Orientierungen des Läufers zugeordnet sind, können über das Least-Square Verfahren den Messwerten des Orientierungsmagnetfelds die entsprechenden Werte des Orientierungsmagnetfelds der Look-up Tabelle bestimmt werden, auf deren Basis dann über die Zuordnung der Look-up Tabelle die entsprechenden Orientierungen des Läufers relativ zum Statormodul bestimmt werden können

Nach einer Ausführungsform weist der Läufer ferner eine Übertragungseinheit auf, die eingerichtet ist, die im Magnetfeldbestimmungsschritt aufgenommenen Messwerte des Orientierungsmagnetfelds an die Steuerung zu übertragen, und wobei der Ausrichtungsbestimmungsschritt und der Orientierungsbestimmungsschritt durch die Steuerung ausgeführt werden.

Hierdurch wird der technische Vorteil erreicht, dass keine zusätzlichen Komponenten, insbesondere eine Prozessoreinheit, am Statormodul zum Durchführen der Ausrichtungsbestimmungsund Orientierungsbestimmungsschritte ausgebildet werden müssen. Durch Übermitteln der entsprechenden Daten mittels der am Läufer ausgebildeten Übertragungseinheit können alle Berechnungsschritte von der Steuereinheit des Planarantriebssystems ausgeführt werden. Somit kann das Verfahren zum Steuern eines Planarantriebssystems durch ein beliebiges Planarantriebssystem mit lediglich einer zusätzlichen Komponente in Form der Magnetfeldsensoreinrichtung ausgeführt werden.

Nach einer Ausführungsform weist der Läufer ferner eine Prozessoreinheit, die eingerichtet ist den Ausrichtungsbestimmungsschritt und den Orientierungsbestimmungsschritt durchzuführen, und eine Übertragungseinheit auf, die eingerichtet ist, die im Ausrichtungsbestimmungsschritt bestimmte Ausrichtung und/oder die im Orientierungsbestimmungsschritt bestimmte Orientierung an die Steuerung zu übertragen.

Hierdurch wird der technische Vorteil erreicht, dass eine Datenübertragung zwischen dem Läufer und der Steuereinheit des Planarantriebssystems mit einem möglichst geringen Datenvolumen erreicht werden kann. Durch die am Läufer ausgebildete Prozessoreinheit, die eingerichtet ist, den Ausrichtungsbestimmungsschritt und den Orientierungsbestimmungsschritt und die damit verbundene Auswertung der aufgenommenen Messwerte des Orientierungsmagnetfelds durchzuführen, wird erreicht, dass statt einer Übertragung der von der Magnetfeldsensoreinrichtung aufgenommenen Messwerte des Orientierungsmagnetfelds vom Läufer an die Steuereinheit, ausschließlich die ausgewerteten Daten, insbesondere die berechnete Ausrichtung der Läufervorzugsrichtung relativ zur Statormodulvorzugsrichtung bzw. der berechneten Orientierung des Läufers relativ zum Statormodul zur weiteren Verarbeitung an die Steuereinheit übertragen werden. Hierdurch kann das zu übertragende Datenvolumen substantiell verringert werden und eine Datenübertragung vereinfacht und beschleunigt werden.

Nach einer Ausführungsform ist eine Energieversorgung der Magnetfeldsensoreinrichtung als eine drahtlose Energieversorgung ausgebildet.

Hierdurch wird der technische Vorteil erreicht, dass keine zusätzliche Verkabelung der Läufer des Planarantriebssystems und damit verbunden eine Verringerung der Bewegungsfreiheit des Läufers auf dem Statormodul zur Energieversorgung benötigt wird. Eine Energieversorgung der Magnetfeldsensoreinrichtung des Läufers kann über eine drahtlose Energieversorgung in Form einer entsprechenden Modulation des vom Statormodul erzeugten Statorfelds erreicht werden. Neben einer zusätzlichen Verkabelung kann somit ebenfalls auf eine zusätzliche Energiequelle zur Energieversorgung der Magnetfeldsensoreinrichtung verzichtet werden.

Nach einer Ausführungsform umfasst die Magnetfeldsensoreinrichtung des Läufers eine Mehrzahl von 2D-Hallsensoren oder eine Mehrzahl von 3D-Hallsensoren, wobei Messkanäle der 2D-oder 3D-Hallsensoren jeweils parallel oder antiparallel zueinander angeordnet sind.

Hierdurch wird der technische Vorteil erreicht, dass eine möglichst präzise Bestimmung des Orientierungsmagnetfelds und damit verbunden eine möglichst präzise Bestimmung der Orientierung des Läufers relativ zum Statormodul erreicht werden kann. Durch die Verwendung einer Mehrzahl von 2D- bzw. 3D-Hallsensoren kann eine Mehrzahl unabhängiger Messwerte des Orientierungsmagnetfelds aufgenommen werden und somit eine Präzisierung der Bestimmung des Orientierungsmagnetfelds und damit verbunden einer Bestimmung der Orientierung des Läufers relativ zum Statormodul erhöht werden. Die Ausrichtung der einzelnen Messkanäle der mehreren 2D- bzw. 3D-Hallsensoren in paralleler oder antiparalleler Orientierung ermöglicht eine Berücksichtigung aller Messwerte der einzelnen 2D- bzw. 3D-Hallsensoren zur Bestimmung des Orientierungsmagnetfelds und ermöglicht somit eine weitere Erhöhung der Präzision und Messgenauigkeit.

Nach einer Ausführungsform umfasst die Magnetfeldsensoreinrichtung des Läufers zwei 2D-Hallsensoren oder SD-Hallsensoren, wobei die zwei 2D-Hallsensoren oder 3D-Hallsensoren beabstandet zu einander am Läufer angeordnet sind, und wobei eine Verbindungslinie zwischen den zwei 2D-, 3D-Hallsensoren durch ein geometrisches Zentrum der Lauffläche des Läufers verläuft.

Hierdurch wird der technische Vorteil erreicht, dass durch die Positionierung der zwei 2D- bzw. 3D-Hallsensoren außerhalb eines geometrischen Zentrums der Lauffläche des Läufers Streueffekte des Statormagnetfelds und des Orientierungsmagnetfelds, die an Kanten des Statormoduls bzw. an Kontaktstellen zwischen mehreren Statorsegmenten des Statormoduls auftreten, zur Bestimmung des Orientierungsmagnetfelds kompensiert werden können, indem die zwei 2D- bzw. 3D-Hallsensoren derart am Läufer angeordnet sind, dass für jede Positionierung des Läufers auf dem Statormodul bzw. auf einer Mehrzahl aneinandergereihter Statormodule wenigstens einer der zwei 2D- bzw. 3D-Hallsensoren außerhalb des Bereichs angeordnet ist, in dem das Streufeld des Statormagnetfelds bzw. des Orientierungsmagnetfelds auftritt. Hierdurch kann eine Messgenauigkeit des Orientierungsmagnetfelds erreicht werden.

Nach einer Ausführungsform umfasst die Magnetfeldsensoreinrichtung des Läufers drei 2D-Hallsensoren oder 3D-Hallsensoren, wobei die drei 2D-Hallsensoren oder 3D-Hallsensoren beabstandet zu einander am Läufer angeordnet sind und eine dreieckige Anordnung bilden, und wobei ein geometrisches Zentrum der Lauffläche des Läufers auf einer Fläche der durch die drei 2D-Hallsensoren oder 3D-Hallsensoren gebildeten dreieckigen Anordnung oder auf einer Verbindungslinie zwischen zwei der drei 2D-, 3D-Hallsensoren angeordnet ist. Hierdurch wird der technische Vorteil erreicht, dass eine Messgenauigkeit des Orientierungsmagnetfelds weiter erhöht werden kann. Durch die Anordnung von drei 2D- bzw. 3D-Hallsensoren in einer dreieckigen Anordnung, bei der keiner der drei 2D- bzw. 3D-Hallsensoren im geometrischen Zentrum der Lauffläche des Läufers angeordnet ist, können Einflüsse des Streufelds des Statormagnetfelds bzw. des Orientierungsmagnetfelds, die an den Kanten des Statormoduls bzw. an Kontaktbereichen mehrerer Statorsegmente eines Statormoduls auftreten, kompensiert werden, indem wenigstens ein 2D- bzw. 3D-Hallsensor außerhalb der Bereiche des Streufelds angeordnet ist.

Nach einer Ausführungsform ist das Orientierungsmagnetfeld als ein statisches Magnetfeld ausgebildet.

Hierdurch wird der technische Vorteil erreicht, dass eine weitere Präzisierung des Orientierungsmagnetfelds und damit verbunden eine weitere Präzisierung der Bestimmung der Orientierung des Läufers relativ zum Stator erreicht werden kann.

Nach einer Ausführungsform sind die Magneteinrichtung am Läufer und die Magnetfeldsensoreinrichtung am Statormodul ausgebildet, wobei die Statormodulvorzugsrichtung mit der Sensorvorzugsrichtung und die Läufervorzugsrichtung mit der Magnetfeldvorzugsrichtung identifiziert sind, wobei die Magnetfeldsensoreinrichtung wenigstens einen Magnetfeldsensor des Sensormoduls des Statormoduls umfasst, wobei der wenigstens eine Magnetfeldsensor als ein 2D-Hallsensor oder 3D-Hallsensor ausgebildet ist, wobei die Sensorvorzugsrichtung der Magnetfeldsensoreinrichtung durch einen der Messkanäle des Hallsensors definiert ist, wobei die Magneteinrichtung als wenigstens ein Permanentmagnet ausgebildet ist, und wobei die Magnetfeldvorzugsrichtung durch einen Nordpol und einen Südpol des Permanentmagneten gebildet ist.

Hierdurch wird der technische Vorteil erreicht, dass eine möglichst einfache Lösung zum Erzeugen des Orientierungsmagnetfelds bereitgestellt werden kann. Hierzu wird die Magnetfeldeinrichtung am Läufer ausgebildet, während die Magnetfeldsensoreinrichtung durch die Magnetfeldsensoren des Sensormoduls des Statormoduls gebildet ist. Die Magnetfeldeinrichtung am Läufer kann hierbei als ein Permanentmagnet ausgebildet sein, sodass ein möglichst einfaches Orientierungsmagnetfeld erzeugt werden kann. Durch die Realisierung der Magnetfeldsensoreinrichtung durch die Magnetfeldsensoren des Sensormoduls des Statormoduls wird keine zusätzliche Komponente zur Realisierung der Magnetfeldsensoreinrichtung benötigt. Darüber hinaus können die erstellten Messwerte der Magnetfeldsensoreinrichtung über die übliche Datenverbindung zwischen dem Statormodul und der Steuereinheit an diese übertragen werden. Eine weitere Einrichtung zur Datenübermittlung kann somit ebenfalls vermieden werden.

Nach einem zweiten Aspekt der Erfindung wird ein Planarantriebssystem mit wenigstens einer Steuereinheit, einem Statormodul mit einer Statoroberfläche und einem auf der Statoroberfläche positionierbaren Läufer bereitgestellt, wobei das Statormodul eingerichtet ist, zum elektrischen Steuern des Läufers entlang der Statoroberfläche Statormagnetfelder zu generieren, wobei der Läufer eine Magnetanordnung zum Generieren eines Läufermagnetfelds aufweist, wobei über die Statormagnetfelder und das Läufermagnetfeld eine magnetische Kopplung zwischen dem Läufer und dem Statormodul erzielbar ist, wobei das Statormodul zum Bestimmen einer Position des Läufers ein Sensormodul mit einer Mehrzahl von Magnetfeldsensoren umfasst, wobei das Statormodul oder der Läufer eine Magneteinrichtung zum Generieren eines Orientierungsmagnetfelds aufweist, wobei das Orientierungsmagnetfeld rotationsasymmetrisch bezüglich einer Rotation um eine zur Statoroberfläche senkrechte Rotationsachse ist und eine Magnetfeldvorzugsrichtung aufweist, und wobei der jeweils andere des Statormoduls und des Läufers eine Magnetfeldsensoreinrichtung mit einer Sensorvorzugsrichtung zum Detektieren des Orientierungsmagnetfelds entlang der Sensorvorzugsrichtung aufweist, und wobei das Planarantriebssystem ausgebildet ist, das Verfahren zum Steuern eines Planarantriebssystems nach einer Ausführungsform auszuführen.

Hierdurch kann ein Planarantriebssystem bereitgestellt werden, das über eine präzise und verbesserte Steuerung verfügt und eingerichtet ist, das erfindungsgemäße Verfahren mit den genannten Vorteilen auszuführen.

Die Erfindung wird anhand der beigefügten Figuren näher erläutert. Hierbei zeigen:
- Fig. 1: eine schematische Darstellung eines Planarantriebssystems mit einem Statormodul und einem Läufer gemäß einer Ausführungsform;
- Fig. 2: eine schematische perspektivische Ansicht eines Sensormoduls des Statormoduls gemäß einer Ausführungsform;
- Fig. 3: eine schematische Darstellung einer Unterseite eines Läufers gemäß einer Ausführungsform;
- Fig. 4: ein Flussdiagramm eines Verfahrens zum Steuern eines Planarantriebssystems gemäß einer Ausführungsform;
- Fig. 5: ein weiteres Flussdiagramm des Verfahrens zum Steuern eines Planarantriebssystems gemäß einer weiteren Ausführungsform;
- Fig. 6: eine schematische Darstellung eines Läufers und eines Sensormoduls gemäß einer Ausführungsform;
- Fig. 7: ein weiteres Flussdiagramm des Verfahrens zum Steuern eines Planarantriebssystems gemäß einer weiteren Ausführungsform;
- Fig. 8a: eine weitere schematische Darstellung eines Läufers und eines Statormoduls gemäß einer weiteren Ausführungsform;
- Fig. 8b: eine weitere schematische Darstellung eines Läufers und eines Statormoduls gemäß einer weiteren Ausführungsform;
- Fig. 8c: eine weitere schematische Darstellung eines Läufers und eines Statormoduls gemäß einer weiteren Ausführungsform;
- Fig. 9: eine weitere schematische Darstellung eines Läufers und eines Statormoduls gemäß einer weiteren Ausführungsform;
- Fig. 10: eine weitere schematische Darstellung eines Läufers gemäß einer weiteren Ausführungsform; und
- Fig. 11: eine weitere schematische Darstellung einer Unterseite eines Läufers gemäß einer weiteren Ausführungsform.

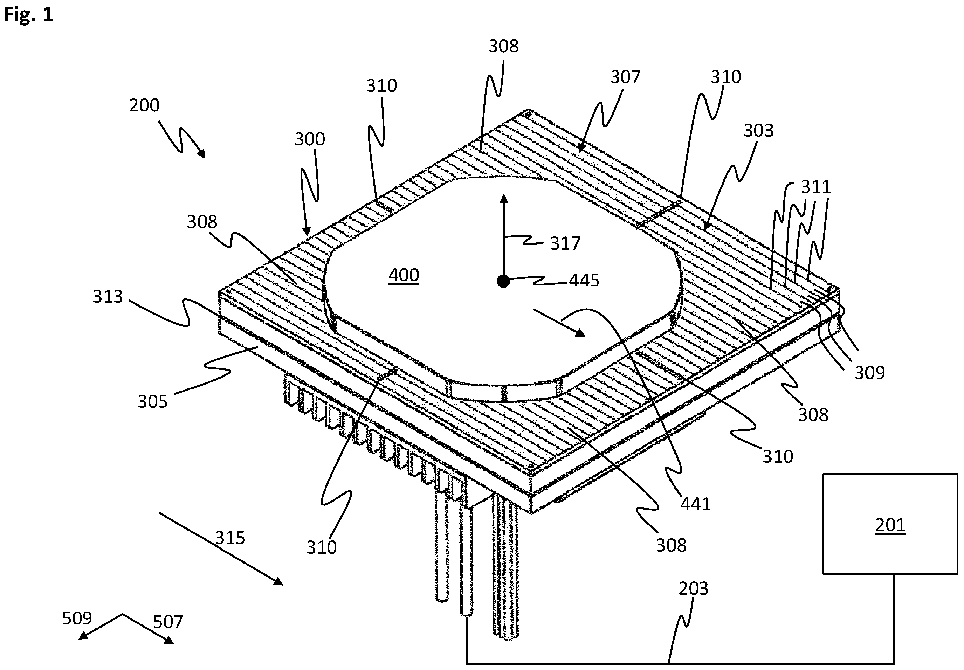

Fig. 1 zeigt eine schematische Ansicht eines Planarantriebssystems 200 mit einem Statormodul 300 und einem Läufer 400.

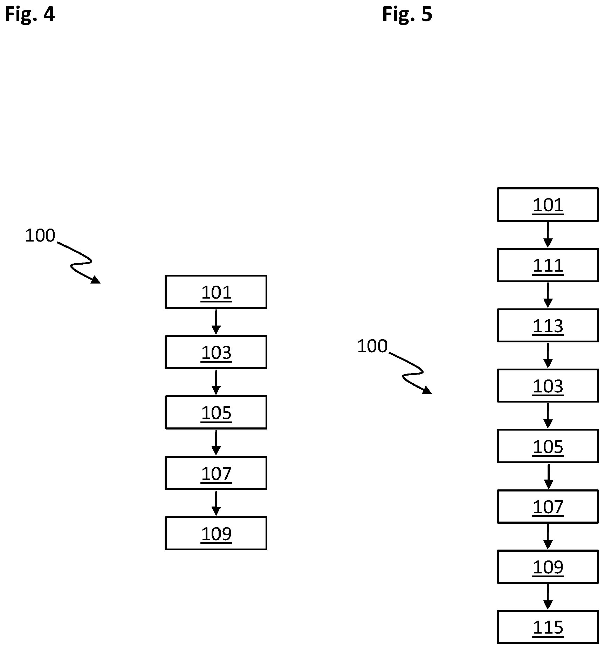

Gemäß der Ausführungsform in Fig. 1 umfasst das Planarantriebssystem eine Steuereinheit 201, ein Statormodul 300 und einen Läufer 400. Die Steuereinheit 201 ist über eine Datenverbindung 203 mit dem Statormodul 300 verbunden. Die Steuereinheit 201 ist eingerichtet, ein erfindungsgemäßes Verfahren 100 zum Steuern eines Planarantriebssystems 200 auszuführen. Für eine detaillierte Beschreibung des erfindungsgemäßen Verfahrens zum Steuern eines Planarantriebssystems 200 und der Funktionsweise der Positionszuordnungsfunktion 205 wird auf die Beschreibung zu den Fig. 4, Fig. 5, Fig. 7 und Fig. 9 verwiesen.

Das Statormodul 300 hat eine ebene Statoroberfläche 303. Die ebene Statoroberfläche 303 ist an einer Oberseite eines Statormodulgehäuses 305 angeordnet. Oberhalb der Statoroberfläche 303 ist ein Läufer 400 angeordnet. Die Statoroberfläche 303 ist Teil einer Statoreinheit 307 für einen elektrischen Antrieb des Läufers 400. Die Statoreinheit 307 mit der Statoroberfläche 303 kann als Leiterplatte ausgeführt sein. Die Statoroberfläche 303 ist quadratisch ausgebildet.

Die Statoreinheit 307 weist vier Statorsegmente 308 auf, die über eine Kontaktstruktur 310 mit Elektronikmodulen (nicht dargestellt) im Inneren des Statormodulgehäuses 305 verbunden sind.

Der Läufer 400 ist oberhalb der Statoroberfläche 303 zumindest in eine erste Richtung 507 und in eine zweite Richtung 509 antreibbar. Die Statoroberfläche 303 weist mehrere Statorleiter 309 auf, die in der Ausführungsform in Fig. 1 als Statorleiter 309 ausgebildet sind, und die im Wesentlichen entlang der ersten Richtung 507 ausgerichtet sind. Die Statorleiter 309 sind stromleitend ausgebildet und können so bestromt werden, dass der Läufer 400 angetrieben wird. Zwischen den Statorleitern 309 ist ein Statorleiterzwischenraum 311 vorgesehen, durch den die Statorleiter 309 voneinander elektrisch isoliert sind. Unterhalb der Statoroberfläche 303 kann eine weitere Anordnung von Statorleitern vorgesehen sein, in der die Statorleiter im Wesentlichen entlang der zweiten Richtung 509 ausgerichtet sind.

In dem Statormodulgehäuse 305 sind die Elektronikmodule für den Antrieb und für die Steuerung des Läufers 400 angeordnet. Die Elektronikmodule können beispielsweise Leistungsmodule zur Erzeugung der Antriebsströme und Steuermodule zur Steuerung der Leistungsmodule und der Antriebsströme umfassen. Auf einer der Statoroberfläche 303 gegenüberliegenden Unterseite des Statormodulgehäuses 305 sind nicht dargestellte Anschlüsse angeordnet zur Verbindung des Statormoduls 300 mit mehreren Anschlussleitungen. Die Anschlussleitungen können beispielsweise eine Steuerleitung zur Übertragung von Steuersignalen für die Steuermodule und eine Energieversorgungsleitung zur Versorgung der Leistungs- und/oder Steuermodule mit elektrischer Energie umfassen. Insbesondere kann dem Leistungsmodul über die Energieversorgungsleitung elektrische Energie zur Erzeugung der Antriebsströme zugeführt werden.

Das Statormodulgehäuse 305, die Statoreinheit 307 und die Statoroberfläche 303 sind in der Draufsicht auf die Statoroberfläche 303 rechteckig, insbesondere quadratisch, ausgebildet.

Das Statormodulgehäuse 305 weist eine Schnittebene 313 auf. Auf Höhe der Schnittebene 313 kann innerhalb des Statormodulgehäuses 305 ein Sensormodul angeordnet sein.

In Fig. 1 ist der Läufer 400 mit einer Läufervorzugsrichtung 441 versehen. Diese ist beliebig wählbar und dient ausschließlich zur Bestimmung einer Orientierung des Läufers 400 relativ zum Statormodul 300. Das Statormodul 300 ist mit einer ebenfalls wählbaren Statormodulvorzugsrichtung 315 versehen. In Fig. 1 sind beide Vorzugsrichtungen parallel angeordnet. Dies ist aber nicht notwendig und ist beliebig änderbar. Ferner ist eine Rotationsachse 317 dargestellt, die senkrecht zur Statoroberfläche 303 orientiert ist und durch ein geometrisches Zentrum 445 des Läufers 400 verläuft.

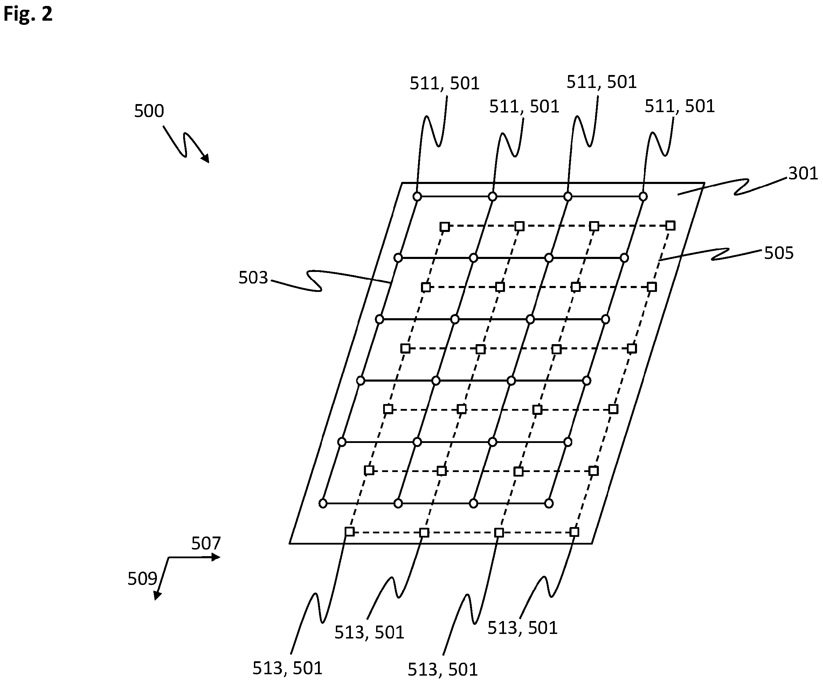

Fig. 2 zeigt eine perspektivische Ansicht eines Sensormoduls 500 zur Erfassung einer Position des Läufers 400 im Planarantriebssystem 200. Das Sensormodul 500 ist rechteckig angeordnet und weist eine zweidimensionale Anordnung von Magnetfeldsensoren 501 auf einem Träger 301 des Statormoduls 300 auf. Die Magnetfeldsensoren 501 sind auf dem Träger 301 angeordnet. Die zweidimensionale Anordnung der Magnetfeldsensoren 501 weist ein erstes periodisches Gitter 503 von Magnetfeldsensoren 501 und ein zweites periodisches Gitter 505 von Magnetfeldsensoren 501 auf. Die Magnetfeldsensoren 501 des ersten Gitters 503 sind durch runde Symbole angedeutet, während die Magnetfeldsensoren 501 des zweiten Gitters 505 durch viereckige Symbole angedeutet sind.

Sofern im Sinne der Anmeldung auf die Magnetfeldsensoren 501 allgemein eingegangen wird, findet das Bezugszeichen 501 Verwendung.

Die ersten Magnetfeldsensoren 511 sind mit durchgezogenen Linien zur Verdeutlichung der Gitterstruktur des ersten Gitters 503 verbunden. Die zweiten Magnetfeldsensoren 513 sind mit gestrichelten Linien zur Verdeutlichung der Gitterstruktur des zweiten Gitters 505 verbunden. Die ersten Magnetfeldsensoren 511 und die zweiten Magnetfeldsensoren 513 können dabei identisch sein, die runden beziehungsweise eckigen Symbole sollen nur die Positionen der Magnetfeldsensoren 501 zugehörig zu den jeweiligen Teilanordnungen symbolisieren.

Das erste Gitter 503 und das zweite Gitter 505 sind identisch aufgebaut und zueinander verschoben. Dadurch sind die zweiten Magnetfeldsensoren 513 des zweiten Gitters 505 und die ersten Magnetfeldsensoren 511 des ersten Gitters 503 jeweils zueinander verschoben.

Die in Fig. 2 dargestellte Anordnung der Magnetfeldsensoren 501 dient ausschließlich zur Illustration und kann von der in Fig. 2 dargestellten Anordnung abweichen.

Die Magnetfeldsensoren 501 sind jeweils eingerichtet, Magnetfelder für einen Raumbereich (nicht dargestellt) zu bestimmen. Messungen eines Magnetfeldsensors 501 sind somit auf den jeweiligen Raumbereich des jeweiligen Magnetfeldsensors 501 beschränkt. Die Raumbereiche der Magnetfeldsensoren 501 können geometrisch beliebig gestaltete räumliche Ausdehnungen aufweisen und beispielsweise kreisförmig ausgestaltet sein. Insbesondere können die Raumbereiche punktförmig ausgestaltet sein, sodass durch die Magnetfeldsensoren 501 Punktmessungen der jeweiligen Magnetfelder durchgeführt werden können, bei denen einzelne Magnetfeldsensoren 501 ausschließlich Feldbeiträge der jeweiligen Magnetfelder messen, die unmittelbar an den Positionen der jeweiligen Magnetfeldsensoren 501 angeordnet sind.

Der Träger 301 ist eben, so dass die Magnetfeldsensoren 501 in einer Ebene, also in einer zweidimensionalen Anordnung, angeordnet sind.

Die Magnetfeldsensoren 501 können als Hall-Sensoren ausgebildet sein. Insbesondere können die Magnetfeldsensoren 501 als 2D- oder 3D-Hall-Sensoren ausgebildet sein, wobei 3D-Hall-Sensoren die Magnetfeldkomponenten in drei linear unabhängigen Raumrichtungen messen. Diese Raumrichtungen können insbesondere die erste Richtung 507 und die zweite Richtung 509 sowie eine dritte Richtung senkrecht zur ersten Richtung 507 und zur zweiten Richtung 509 umfassen.

Der Träger 301 kann als eine Leiterplatte und/oder eine Platine ausgebildet sein. Dadurch kann der Träger 301 auf einfachem Weg bereitgestellt werden.

Die Anordnung von Magnetfeldsensoren 501 kann genau zwei Teilanordnungen der zwei Gitter 503, 505 umfassen.

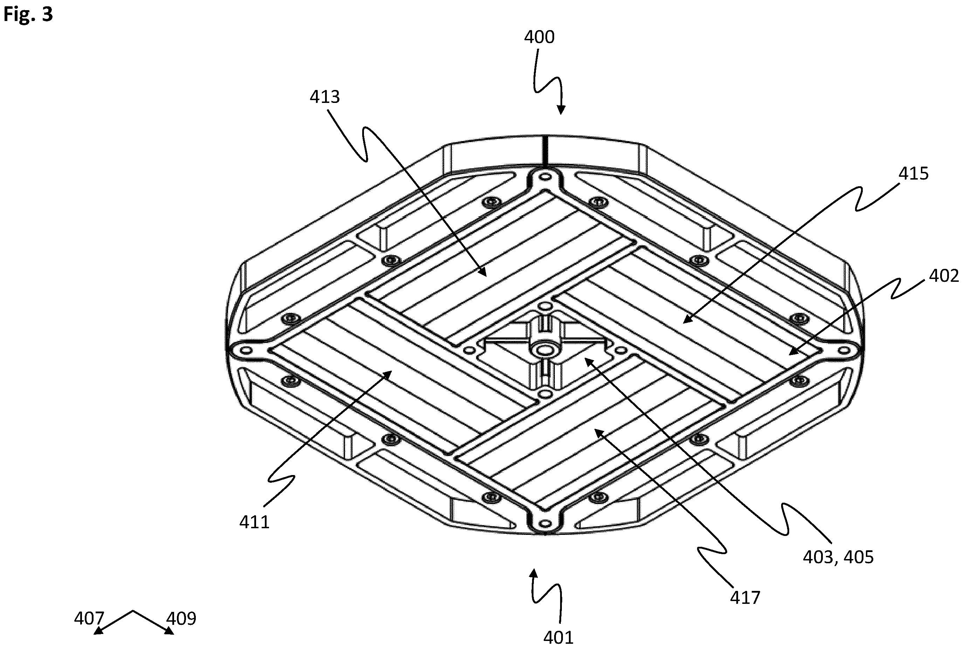

Fig. 3 zeigt den Läufer 400 des Planarantriebssystems 200 in einer Ansicht von unten auf eine Unterseite des Läufers 400. Im Betrieb des Planarantriebssystems 200 ist die Unterseite des Läufers 400 der Statoroberfläche 303 des Statormoduls 300 zugewandt angeordnet. Der Läufer 400 weist an der Unterseite eine Magnetanordnung 401 auf. Die Magnetanordnung 401 ist rechteckig, insbesondere quadratisch, ausgebildet und umfasst mehrere Magneten. Die Unterseite des Läufers 400 ist, insbesondere im Bereich der Magneten der Magnetanordnung 401, eben bzw. planar ausgebildet. Im Betrieb ist die Unterseite des Läufers 400 mit der Magnetanordnung 401 im Wesentlichen parallel zu der Statoroberfläche 303 orientiert und der Statoroberfläche 303 zugewandt angeordnet.

Die Magnetanordnung 401 umfasst eine erste Magneteinheit 411, eine zweite Magneteinheit 413, eine dritte Magneteinheit 415 und eine vierte Magneteinheit 417. Die erste Magneteinheit 411 und die dritte Magneteinheit 415 weisen jeweils in einer ersten Läuferrichtung 407 nebeneinander angeordnete und entlang einer zu der ersten Läuferrichtung 407 senkrecht orientierten zweiten Läuferrichtung 409 ausgedehnte längliche Antriebsmagnete auf. Die zweite Magneteinheit 413 und die vierte Magneteinheit 417 weisen jeweils in der zweiten Läuferrichtung 409 nebeneinander angeordnete und entlang der ersten Läuferrichtung 407 ausgedehnte, längliche Antriebsmagnete auf. Die erste und dritte Magneteinheit 411, 415 dient im Betrieb einem Antrieb des Läufers 400 in der ersten Läuferrichtung 407, und die zweite und vierte Magneteinheit 413, 417 dient im Betrieb einem Antrieb des Läufers 400 in der zweiten Läuferrichtung 409. Darüber hinaus dienen alle Magneteinheiten 413, 417 einem Antrieb in eine zur Statoroberfläche 303 senkrechte Richtung.

In der Mitte der Magnetanordnung 401 weist der Läufer 400 eine Freifläche 403 auf, die nicht von Magneten der Magnetanordnung 401 bedeckt wird. Im Bereich der Freifläche 403 weist der Läufer 400 eine Befestigungsstruktur 405 auf.

Fig. 4 zeigt ein Flussdiagramm des Verfahrens 100 zum Steuern eines Planarantriebssystems 200 gemäß einer Ausführungsform.

Das in Fig. 4, 5 und 7 gezeigte Verfahren 100 wird unter Berücksichtigung der Beschreibung der Fig. 1 bis 3, 6 und 7 bis 11 vorgenommen.

Das Verfahren 100 zum Steuern eines Planarantriebssystems 200 ist auf ein Planarantriebssystem 200 anwendbar, das eine Steuereinheit 201, ein Statormodul 300 mit einer Statoroberfläche 303 und einen auf der Statoroberfläche 303 positionierbaren Läufer 400 umfasst. Das Statormodul 300 ist eingerichtet, zum elektrischen Steuern des Läufers 400 entlang der Statoroberfläche 303 Statormagnetfelder zu generieren, wobei der Läufer 400 eine Magnetanordnung 401 zum Generieren eines Läufermagnetfelds aufweist. Über die Statormagnetfelder und das Läufermagnetfeld ist eine magnetische Kopplung zwischen dem Läufer 400 und dem Statormodul 300 erzielbar. Das Statormodul 300 umfasst zum Bestimmen einer Position des Läufers 400 ein Sensormodul 500 mit einer Mehrzahl von Magnetfeldsensoren 501.

Darüber hinaus umfasst das Statormodul 300 oder der Läufer 400 eine Magneteinrichtung 419 zum Generieren eines Orientierungsmagnetfelds, wobei das Orientierungsmagnetfeld rotationsasymmetrisch bezüglich einer Rotation um eine zur Statoroberfläche 303 senkrechten Rotationsachse 317 ist und eine Magnetfeldvorzugsrichtung 319 aufweist. Die jeweils andere Komponente des Statormoduls 300 und des Läufers 400 weist eine Magnetfeldsensoreinrichtung 424 mit einer Sensorvorzugsrichtung 443 zum Detektieren des Orientierungsmagnetfelds entlang der Sensorvorzugsrichtung 443 auf.

In einem Vorzugsrichtungsidentifikationsschritt 101 wird eine Statormodulvorzugsrichtung 315 des Statormoduls 300 mit der Magnetfeldvorzugsrichtung 319 oder der Sensorvorzugsrichtung 443 identifiziert, und eine Läufervorzugsrichtung 441 des Läufers 400 wird mit der jeweils anderen der Magnetfeldvorzugsrichtung 319 oder der Sensorvorzugsrichtung 443 identifiziert.

Die Statormodulvorzugsrichtung 315 ist hierbei eine beliebige Richtung parallel zur Statoroberfläche 303, die zur Orientierung des Läufers 400 relativ zum Statormodul 300 dient. Die Läufervorzugsrichtung 441 ist eine beliebig wählbare Richtung, die parallel zu einer Lauffläche 402, die an der Unterseite des Läufers 400 angeordnet ist, verläuft und für eine Orientierung des Läufers 400 relativ zum Statormodul 300 durch eine Bestimmung einer Ausrichtung der Läufervorzugsrichtung 441 relativ zur Statormodulvorzugsrichtung 315 dient.

Die Magnetfeldvorzugsrichtung 319 ist vorliegend durch eine Symmetrieachse des Orientierungsmagnetfelds gegeben und in Abhängigkeit davon, ob die Magneteinrichtung 419 am Läufer 400 oder am Statormodul 300 angeordnet ist, parallel zur Lauffläche 402 des Läufers 400 oder parallel zur Statoroberfläche 303 des Statormoduls 300 orientiert.

Die Magnetfeldsensoreinrichtung 424 kann durch einen oder eine Mehrzahl von 2D/3D-Hallsensoren gebildet sein. Die Sensorvorzugsrichtung 443 der Magnetfeldsensoreinrichtung 424 ist damit durch die Ausrichtung der Messkanäle der 2D/3D-Hallsensoren, insbesondere durch die X-, Y- oder Z-Messkanäle, definiert.

Nach Identifikation der Statormodulvorzugsrichtung 315 und der Sensorvorzugsrichtung 443 wird in einem Magnetfeldstellungsschritt 103 durch die Magneteinrichtung 419 das Orientierungsmagnetfeld gestellt.

Darauffolgend wird wenigstens ein Messwert des Orientierungsmagnetfelds durch die Magnetfeldsensoreinrichtung 424 in einem Magnetfeldbestimmungsschritt 105 bestimmt. Der wenigstens eine Messwert des Orientierungsmagnetfelds umfasst hierbei wenigstens einen Wert einer Komponente des Orientierungsmagnetfelds in einer Richtung parallel zur Sensorvorzugsrichtung 443. Ist die Magnetfeldsensoreinrichtung 424 durch wenigstens einen 2D/3D-Hallsensor gebildet, so umfasst der vom 2D/3D-Hallsensor aufgenommene Messwert wenigstens eine Komponente des X-, Y-oder Z-Messkanals des 2D/3D-Hallsensors.

Darauffolgend wird in einem Ausrichtungsbestimmungsschritt 107 eine Ausrichtung der Läufervorzugsrichtung 441 relativ zur Statormodulvorzugsrichtung 315 auf Basis des gemessenen Werts der Komponente des Orientierungsmagnetfelds parallel zur Sensorvorzugsrichtung 443 bestimmt. Die Ausrichtung der Läufervorzugsrichtung 441 relativ zur Statormodulvorzugsrichtung 315 kann beispielsweise durch einen Winkel zwischen den beiden Vorzugsrichtungen angegeben sein. Da die Läufervorzugsrichtung 441 oder die Statormodulvorzugsrichtung 315 mit der Sensorvorzugsrichtung 443 oder der Magnetfeldvorzugsrichtung 319 übereinstimmt, je nachdem, ob die Magneteinrichtung 419 am Läufer 400 oder am Statormodul 300 und die Magnetfeldsensoreinrichtung 424 entsprechend an der jeweils anderen Komponente ausgebildet sind, kann über eine Bestimmung der Ausrichtung der Magnetfeldvorzugsrichtung 319 relativ zur Sensorvorzugsrichtung 443 eine Ausrichtung zwischen der Läufervorzugsrichtung 441 und der Statormodulvorzugsrichtung 315 bestimmt werden.

Wird durch die Messung des wenigstens einen Messwerts des Orientierungsmagnetfelds durch die Magnetfeldsensoreinrichtung 424 ermittelt, dass die Sensorvorzugsrichtung 443 der Magnetfeldsensoreinrichtung 424 parallel oder antiparallel zur Magnetfeldvorzugsrichtung 319 orientiert ist, kann hierauf auf eine parallele oder antiparallele Ausrichtung der Läufervorzugsrichtung 441 relativ zur Statormodulvorzugsrichtung 315 geschlossen werden.

Die hier beschrieben Bestimmung der Ausrichtung der Läufervorzugsrichtung 441 relativ zur Statormodulvorzugsrichtung 315 basiert auf der Idee, dass Messwerte einer Komponente des Orientierungsmagnetfelds für verschieden Orientierungen der Sensorvorzugsrichtung 443 relativ zur Magnetfeldvorzugsrichtung 319 verschiedene Werte der Komponente des Orientierungsmagnetfelds ergeben. So wird bei einer parallelen Ausrichtung der Sensorvorzugsrichtung 443, die beispielsweise durch einen X-Kanal eines 3D-Hallsensors gegeben ist, zur Magnetfeldvorzugsrichtung 319, die beispielsweise durch die x-Komponente des Orientierungsmagnetfelds gegeben ist, ein maximaler Wert der x-Komponente des Orientierungsmagnetfelds gemessen. Bei einer Orientierung des Läufers 400, für die die durch den X-Kanal des 3D-Hallsensors gegebene Sensorvorzugsrichtung 443 einem substantiellen Winkel zur durch die x-Komponente des Orientierungsmagnetfelds gegebenen Magnetfeldvorzugsrichtung 319 aufwweist, weist ein durch den X-Kanal des 3D-Hallsensors aufgenommener Messwert des Orientierungsmagnetfelds einen substantiell vom Maximalwert der x-Komponente des Orientierungsmagnetfelds abweichenden Wert auf.

Über die Bestimmung der Abweichungen von aufgenommenen Messwerten des Orientierungsmagnetfelds, beziehungsweise einer Komponente des Orientierungsmagnetfelds, vom Maximalwert der jeweiligen Komponente des Orientierungsmagnetfelds können somit durch das Aufnehmen von Messwerten des Orientierungsmagnetfelds Orientierungen der Sensorvorzugsrichtung 443 zur Magnetfeldvorzugsrichtung 319 und damit verbunden Orientierungen des Läufers 400 relativ zum Statormodul 300 bestimmt werden.

Analog können Rückschlüsse auf die Ausrichtung der beiden Vorzugsrichtungen und damit verbunden auf die Orientierung des Läufers 400 relativ zum Statormodul 300 für beliebige andere Winkel zwischen der Sensorvorzugsrichtung 443 der Magnetfeldsensoreinrichtung 424 und der Magnetfeldvorzugsrichtung 319 des Orientierungsmagnetfelds getroffen werden.

Darauffolgend wird in einem Orientierungsbestimmungsschritt 109 auf Basis der Ausrichtung der Läufervorzugsrichtung 441 relativ zur Statormodulvorzugsrichtung 315 eine erste Orientierung des Läufers 400 relativ zum Statormodul 300 bestimmt.

Eine Orientierung des Läufers 400 relativ zum Statormodul 300 umfasst im Sinne der Anmeldung eine Rotation des Läufers 400 um eine senkrecht zur Statoroberfläche 303 orientierte und durch ein geometrisches Zentrum des Läufers 400 verlaufende Rotationsachse 317. Eine Orientierung des Läufers 400 relativ zum Statormodul 300 umfasst hingegen keine translatorische Bewegung des geometrischen Zentrums des Läufers 400 relativ zum Statormodul 300.

Fig. 5 zeigt ein weiteres Flussdiagramm des Verfahrens 100 zum Steuern eines Planarantriebssystems 200 gemäß einer weiteren Ausführungsform.

Die Ausführungsform in Fig. 5 basiert auf der Ausführungsform in Fig. 4 und umfasst alle Verfahrensschritte aus Fig. 4, die zwecks Vermeidung unnötiger Wiederholung im Folgenden nicht erneut beschrieben werden.

Nach Identifikation der Vorzugsrichtungen im Vorzugsrichtungsidentifikationsschritt 101 wird in einem Positionsbestimmungsschritt 111 eine Position des Läufers 400 relativ zum Statormodul 300 bestimmt. Eine Position des Läufers 400 relativ zum Statormodul 300 umfasst hierbei keine Orientierung des Läufers 400 relativ zum Statormodul 300. Zwei verschiedene Positionen des Läufers 400 relativ zum Statormodul 300 lassen sich hierbei durch eine beliebige Anzahl von Translationsbewegungen des Läufers 400 relativ zum Statormodul 300 ineinander überführen. Eine Bestimmung der Position des Läufers 400 relativ zum Statormodul 300 wird über die Aufnahme einer Mehrzahl von Messwerten des Läufermagnetfelds des Läufers 400 durch die Magnetfeldsensoren 501 des Sensormoduls 500 realisiert.

Darauffolgend wird in einem Arretierschritt 113 ein Arretiermagnetfeld gestellt, durch das der Läufer 400 in der zuvor im Positionsbestimmungsschritt 111 bestimmten Position relativ zum Statormodul 300 arretiert wird. Das Arretiermagnetfeld wird hierbei durch die Statorleiter 309 der Statoreinheiten 307 des Statormoduls 300 gestellt. Das Arretiermagnetfeld wird hierbei derart durch das Statormodul 300 gestellt, dass eine anziehende magnetische Kopplung zwischen dem Läufermagnetfeld des Läufers 400 und dem Arretiermagnetfeld des Statormoduls 300 in einer z-Richtung senkrecht zur Statoroberfläche 303 des Statormoduls 300 erzeugt wird, die den Läufer 400 zur Statoroberfläche 303 des Statormoduls 300 anzieht und diesen in der arretierten Position hält. Hierauf folgend wird in den zu Fig. 4 beschriebenen Verfahrensschritten eine Orientierung des Läufers 400 relativ zum Statormodul 300 in der arretierten Position bestimmt.

Nach Bestimmung der Orientierung des Läufers 400 relativ zum Statormodul 300 im Orientierungsbestimmungsschritt 109 wird in einem Orientierungsschritt 115, die im Orientierungsbestimmungsschritt 109 bestimmte, erste Orientierung des Läufers 400 relativ zum Statormodul 300 in eine zweite Orientierung des Läufers 400 relativ zum Statormodul 300 geändert. Hierzu kann zusätzlich die Arretierung des Läufers 400 in der bestimmten Position relativ zum Statormodul 300 durch Stellen des Arretiermagnetfelds im Arretierschritt 113 gelöst werden, sodass eine Bewegung des Läufers 400 relativ zum Statormodul 300 ermöglicht ist.

Zusätzlich zur Änderung der ersten Orientierung des Läufers 400 in die zweite Orientierung des Läufers 400 relativ zum Statormodul 300 kann eine weitere Steuerung des Läufers 400 und eine damit verbundene translatorische Bewegung des Läufers 400 relativ zum Statormodul 300 durchgeführt werden.

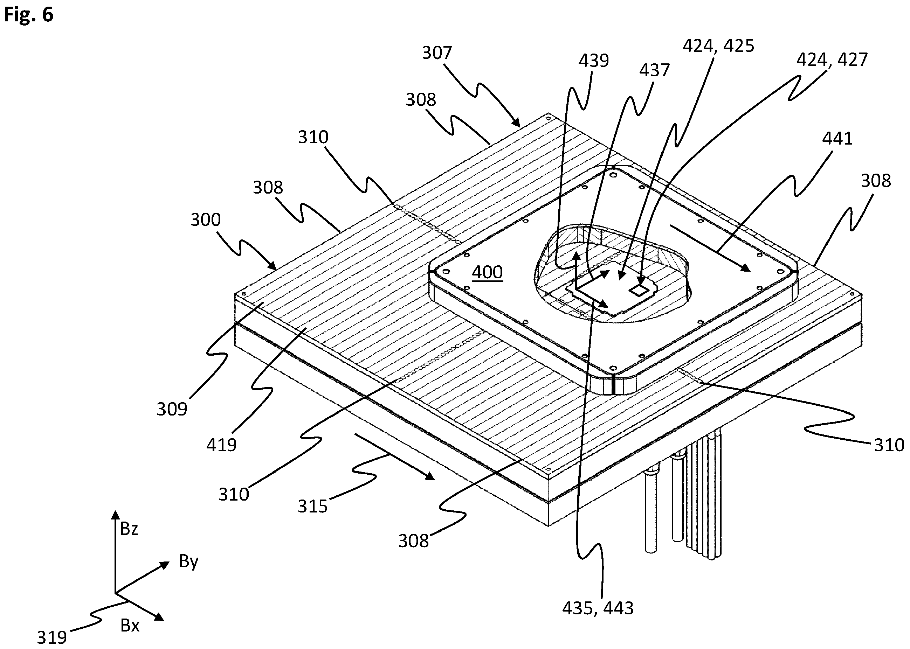

Fig. 6 zeigt eine schematische Darstellung eines Läufers 400 und eines Statormoduls 300 gemäß einer Ausführungsform.

Fig. 6 zeigt ein Statormodul 300 und einen Läufer 400 aus Fig. 1. Die dort beschriebenen Einzelheiten der beiden Komponenten werden im Folgenden nicht erneut detailliert beschrieben.

Am Läufer 400 ist die Magnetfeldsensoreinrichtung 424 in Form eines 2D/3D-Hallsensors 427, der auf einer Läuferleiterplatte 425 angeordnet ist, ausgebildet. Am Statormodul 300 ist dementsprechend die Magneteinrichtung 419 ausgebildet, die in der Ausführungsform in Fig. 6 in Gestalt der Statorleiter 309 der Statorsegmente 308 der Statoreinheit 307 des Statormoduls 300 ausgebildet ist.

Die in Fig. 6 am Läufer 400 gezeigte Öffnung dient lediglich zur Illustration der Magnetfeldsensoreinrichtung 424, die an der Unterseite des Läufers 400 ausgebildet ist.

In der Ausführungsform in Fig. 6 ist der 2D/3D-Hallsensor 427 als ein 3D-Hallsensor ausgebildet und weist einen ersten Messkanal 435, einen zweiten Messkanal 437 und einen dritten Messkanal 439 auf. Die drei Messkanäle sind jeweils rechtwinklig zueinander angeordnet und ermöglichen eine Messung des Orientierungsmagnetfelds in paralleler bzw. antiparalleler Richtung zu dem jeweiligen Messkanal. Durch die Mehrzahl von Messkanälen der 2D/3D-Hallsensoren können verschiedene Komponenten des Orientierungsmagnetfelds bestimmt werden.

Das durch die Statorleiter 309 des Statormoduls 300 erzeugte Statormagnetfeld bzw. Orientierungsmagnetfeld weist je nach Ausrichtung eine x-Komponente Bx, eine senkrecht dazu orientierte y-Komponente By und eine wiederum senkrecht dazu orientierte z-Komponente Bz auf. In der Ausführungsform in Fig. 6 ist der 3D-Hallsensor der Magnetfeldsensoreinrichtung 424 derart ausgerichtet, dass der erste Messkanal 435 parallel zur x-Komponente Bx des Statormagnetfelds bzw. des Orientierungsmagnetfelds orientiert ist, während der zweite Messkanal 437 parallel zur y-Komponente By und der dritte Messkanal 439 parallel zur z-Komponente Bz orientiert sind. In Fig. 6 ist ferner der erste Messkanal 435 als Sensorvorzugsrichtung 443 identifiziert. Die Identifizierung des ersten Messkanals 435 mit der Sensorvorzugsrichtung 443 ist rein beispielhaft und eine Identifizierung der Sensorvorzugsrichtung 443 mit dem zweiten Messkanal 437 ist ebenfalls möglich. In der Ausführungsform in Fig. 6 ist darüber hinaus die Läufervorzugsrichtung 441 mit der Sensorvorzugsrichtung 443 identifiziert, während die Statormodulvorzugsrichtung 315 mit der x-Komponente Bx des Orientierungsmagnetfelds identifiziert ist. Wie bereits oben erwähnt, können die Vorzugsrichtungen des Statormoduls 300 und des Läufers 400 beliebig gewählt werden und dienen lediglich zur Orientierungsbestimmung des rotationssymmetrisch ausgebildeten Läufers 400 relativ zum Statormodul 300.

Alternativ zu der in Fig. 6 gezeigten Ausführungsform kann die Magnetfeldsensoreinrichtung 424 eine Mehrzahl von 2D/3D-Hallsensoren 427 aufweisen.

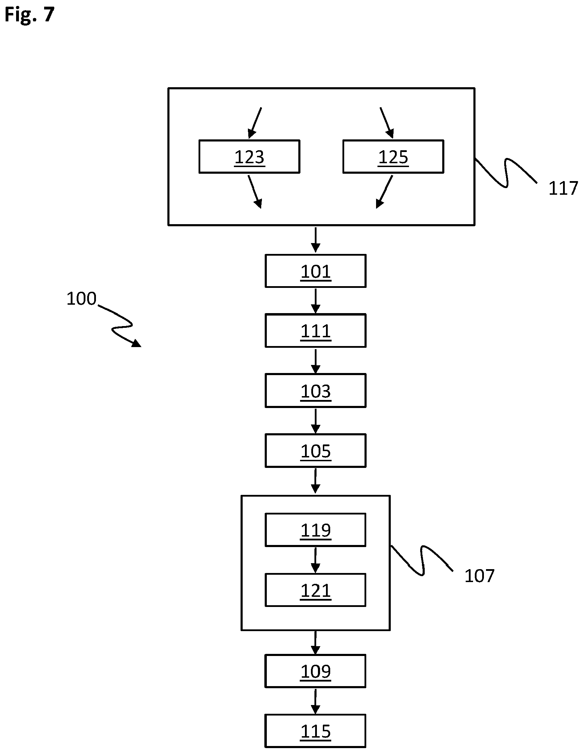

Fig. 7 zeigt ein weiteres Flussdiagramm des Verfahrens 100 zum Steuern eines Planarantriebssystems 200 gemäß einer weiteren Ausführungsform.

Die in Fig. 7 gezeigte Ausführungsform des Verfahrens 100 bezieht sich auf die in Fig. 6 gezeigte Ausführungsform, in der die Magnetfeldsensoreinrichtung 424 am Läufer 400 ausgebildet ist, während die Magneteinrichtung 419 durch die Statorleiter 309 der Statoreinheit 307 des Statormoduls 300 gebildet ist.

Bezüglich der Verfahrensschritte basiert die Ausführungsform in Fig. 7 auf der Ausführungsform in Fig. 5 und umfasst alle dort beschriebenen Verfahrensschritte, die im Folgenden nicht erneut detailliert beschrieben werden.

In der Ausführungsform in Fig. 7 umfasst das Verfahren 100 ferner einen Bestimmungsschritt 117, in dem eine Mehrzahl von Werten des Orientierungsmagnetfelds für eine Mehrzahl verschiedener Ausrichtungen der Läufervorzugsrichtung 441 relativ zur Statormodulvorzugsrichtung 315 bestimmt werden. Im Bestimmungsschritt 117 können somit für verschiedene Orientierungen des Läufers 400 relativ zum Statormodul 300, die wie oben beschrieben verschiedene Ausrichtungen der Läufervorzugsrichtung 441 relativ zur Statormodulvorzugsrichtung 315 mit sich bringen, Werte des für die jeweilige Orientierung zu erwartenden Orientierungsmagnetfelds aufgenommen werden.

Dies kann entweder durch entsprechende Messungen oder alternativ durch Berechnungen in entsprechenden Simulationen durchgeführt werden.

Hierzu können in einem Messschritt 123 für verschiedene Orientierungen des Läufers 400 relativ zum Statormodul 300 und damit verbunden für verschiedene Ausrichtungen der Läufervorzugsrichtung 441 relativ zur Statormodulvorzugsrichtung 315 Messwerte des Orientierungsmagnetfelds parallel zur Sensorvorzugsrichtung 443 des wenigstens einen 2D/3D-Hallsensors 427 der Magnetfeldsensoreinrichtung 424 aufgenommen werden. Hierzu kann beispielsweise der Läufer 400 in verschiedenen Orientierungen auf dem Statormodul 300 positioniert werden und entsprechende Orientierungsfelder gestellt werden, um für die einzelnen Orientierungen des Läufers 400 relativ zum Statormodul 300 entsprechende Messwerte des Orientierungsmagnetfelds aufzunehmen.

Der Messschritt 123 kann vorzugsweise vor dem Durchführen der Steuerung des Läufers 400 auf dem Statormodul 300 als Kalibrierung bzw. Einstellung der Steuerung durchgeführt werden. Hierzu kann für jeden zu steuernden Läufer 400 des Planarantriebssystems 200 ein entsprechender Datensatz von Messwerten des Orientierungsmagnetfelds für beliebige Orientierungen des Läufers 400 relativ zum Statormodul 300 aufgenommen werden. Alternativ kann ein Datensatz für einen Referenzläufer aufgenommen werden, der für die Steuerung aller Läufer 400 des Planarantriebssystems 200 als Referenzdatensatz verwendet wird.

Alternativ zur Messung der einzelnen Messwerte des Orientierungsmagnetfelds im Messschritt 123 können in einer entsprechenden Simulation für verschiedene Orientierungen des Läufers 400 relativ zum Statormodul 300 die zu erwartenden Werte des Orientierungsmagnetfelds in einem Simulationsschritt 125 simuliert werden. Dies kann auf Basis einer Modellbeschreibung der räumlichen Ausgestaltung des Orientierungsmagnetfelds durchgeführt werden, indem für jede beliebige Orientierung des Läufers 400 relativ zum Statormodul 300 entsprechende Werte des Orientierungsmagnetfelds, insbesondere Komponenten des Orientierungsmagnetfelds parallel oder antiparallel zur Sensorvorzugsrichtung 443 berechnet werden.

Ferner umfasst die Ausführungsform in Fig. 7, dass zur Bestimmung der Ausrichtung der Läufervorzugsrichtung 441 relativ zur Statormodulvorzugsrichtung 315 im Ausrichtungsbestimmungsschritt 107 eine Relation zwischen zu erwartenden Messwerten des Orientierungsmagnetfelds und einer entsprechenden Ausrichtung der Läufervorzugsrichtung 441 relativ zur Statormodulvorzugsrichtung 315 und damit verbunden zu einer Orientierung des Läufers 400 relativ zum Statormodul 300 in einem Relationsbestimmungsschritt 119 auf Basis der im Bestimmungsschritt 117 bestimmten Werte des Orientierungsmagnetfelds bestimmt. Diese Relation zwischen den Werten des Orientierungsmagnetfelds und verschiedenen Orientierungen des Läufers 400 relativ zum Statormodul 300 kann beispielsweise in einer entsprechenden Look-up-Tabelle gespeichert sein, in der verschiedenen Orientierungen des Läufers 400 relativ zum Statormodul 300 entsprechende Werte des Orientierungsmagnetfelds zugeordnet sind. Alternativ kann die Relation in einer mathematischen Relation bzw. einer mathematischen Funktion gespeichert sein.

Zur Bestimmung der Ausrichtung der beiden Vorzugsrichtungen im Ausrichtungsbestimmungsschritt 107 wird ferner der wenigstens eine Messwert des Orientierungsmagnetfelds, der im Magnetfeldbestimmungsschritt 105 aufgenommen wurde, mit den Werten der im Relationsbestimmungsschritt 119 bestimmten Relation verglichen. Dieser im Vergleichsschritt 121 durchgeführte Vergleichsprozess kann auf Basis eines Näherungsverfahrens durchgeführt werden, in dem für den Messwert des Orientierungsmagnetfelds der am besten passende Wert des Orientierungsmagnetfelds der Relation identifiziert wird.

Das Näherungsverfahren kann beispielsweise auf einem Least-Square Verfahren basieren, bei dem ein Unterschied zwischen einem gemessenen Wert der Komponente des Orientierungsmagnetfelds parallel zur Sensorvorzugsrichtung 443 und einem Wert des Orientierungsmagnetfelds für eine bestimmte Ausrichtung der Läufervorzugsrichtung 441 relativ zur Statormodulvorzugsrichtung 315 gemäß der Relation minimiert wird, und damit der entsprechende, sprich der am geringsten vom Messwert des Orientierungsmagnetfelds abweichende, Wert des Orientierungsmagnetfelds der Relation bestimmt wird. Auf Basis der Relation ist darauf basierend eine dem Messwert des Orientierungsmagnetfelds entsprechende Orientierung des Läufers 400 relativ zum Statormodul 300 bestimmbar.

Insbesondere wenn die Relation eine Look-up Tabelle umfasst, in der Werten des Orientierungsmagnetfelds Orientierungen des Läufers 400 zugeordnet sind, können über das Least-Square Verfahren den Messwerten des Orientierungsmagnetfelds die entsprechenden Werte des Orientierungsmagnetfelds der Look-up Tabelle bestimmt werden, auf deren Basis dann über die Zuordnung der Look-up Tabelle die entsprechenden Orientierungen des Läufers 400 relativ zum Statormodul 300 bestimmt werden können.

Durch den Vergleichsschritt 121 wird somit zunächst für den aufgenommenen Messwert des Orientierungsmagnetfelds der am besten passende Wert des Orientierungsmagnetfelds der Relation ausgewählt und damit verbunden die entsprechende Ausrichtung der Läufervorzugsrichtung 441 relativ zur Statormodulvorzugsrichtung 315 der Relation dem gemessenen Messwert des Orientierungsmagnetfelds zugeordnet. Somit kann für einen aufgenommenen Messwert des Orientierungsmagnetfelds eine entsprechende Orientierung des Läufers 400 zum Statormodul 300 bzw. damit verbunden eine entsprechende Ausrichtung der Läufervorzugsrichtung 441 relativ zur Statormodulvorzugsrichtung 315 bestimmt werden.

Alternativ zu der Ausführungsform in Fig. 6 kann die Magnetfeldsensoreinrichtung 424 eine Mehrzahl von 2D/3D-Hallsensoren 427 aufweisen. Ferner kann im Magnetfeldbestimmungsschritt 105 eine Mehrzahl von Messwerten des Orientierungsmagnetfelds aufgenommen werden.

Die hier erwähnten Messwerte des Orientierungsmagnetfelds können insbesondere mehrere Komponenten des Orientierungsmagnetfelds umfassen, indem die Magnetfeldsensoren als 2D/3D-Hallsensoren ausgebildet sind und somit wenigstens zwei verschiedene Messkanäle aufweisen, über die wenigstens zwei Komponenten des Orientierungsmagnetfels gemessen werden können.

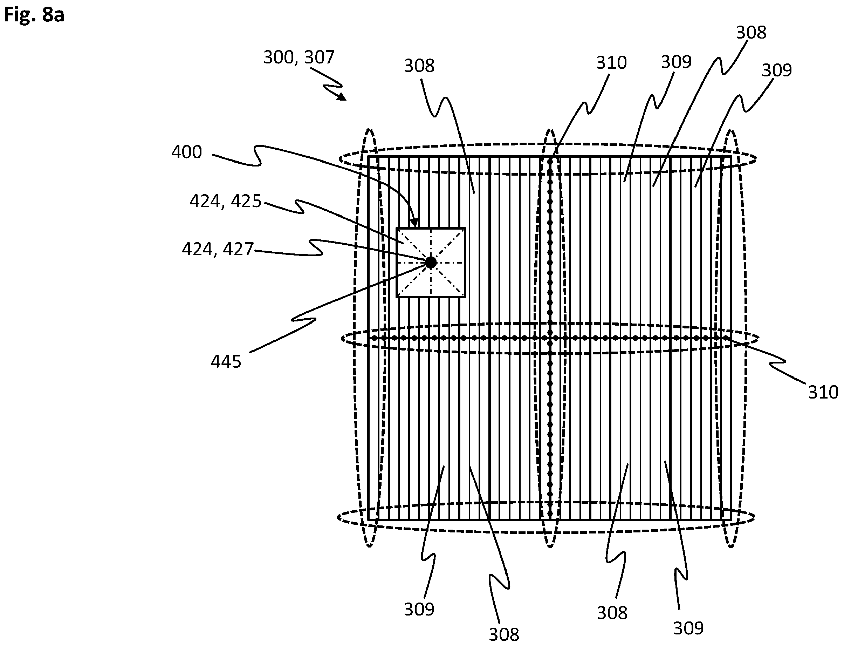

Die von der Magnetfeldsensoreinrichtung 424 aufgenommenen Messwerte des Orientierungsmagnetfelds können über eine Übertragungseinrichtung an die Steuereinheit 201 des Planarantriebssystems 200 übertragen werden und von der Steuereinheit 201 gemäß dem Ausrichtungsbestimmungsschritt 107 und dem Orientierungsbestimmungsschritt 109 ausgewertet werden. Alternativ kann die Durchführung der Ausrichtungsbestimmungsschritte 107 und Orientierungsbestimmungsschritte 109 durch eine Prozessoreinheit, die am Läufer 400 ausgebildet ist, vorgenommen werden. Darüber hinaus kann eine Energieversorgung der Magnetfeldsensoreinrichtung 424 mittels einer drahtlosen Energieversorgung erzielt werden, bei der über eine entsprechende Modulation des durch das Statormodul 300 erzeugten Statormagnetfelds bzw. Orientierungsmagnetfelds eine induktive Energieversorgung der Magnetfeldsensoreinrichtung 424 erreicht wird. Die Figuren 8a bis 8c zeigen drei verschiedene Ausgestaltungen der Magnetfeldsensoreinrichtung 424 mit jeweils einem 2D/3D-Hallsensor, zwei 2D/3D-Hallsensoren oder drei 2D/3D-Hallsensoren.

Fig. 8a zeigt eine weitere schematische Darstellung eines Läufers 400 und eines Statormoduls 300 gemäß einer weiteren Ausführungsform.

In Fig. 8a sind ein Statormodul 300 und ein darauf platzierter Läufer 400 dargestellt. Der Läufer 400 umfasst die Magnetfeldsensoreinrichtung 424, die in der Ausführungsform in Fig. 8a die Läuferleiterplatte 425 und einen darauf platzierten 2D/3D-Hallsensor 427 aufweist. In den Figuren 8a bis 8c ist der Läufer 400 auf die Läuferleiterplatte 425 und die darauf platzierten Hall-Sensoren reduziert, da ausschließlich die Auswirkung der Platzierung der einzelnen Hall-Sensoren auf Effekte des Orientierungsmagnetfelds des Statormoduls 300 dargestellt werden soll.

In Fig. 8a ist der eine 2D/3D-Hallsensor 427 im geometrischen Zentrum 445 des Läufers 400 angeordnet.

Aufgrund von Randeffekten, die jeweils an den Rändern des Statormoduls 300 bzw. an der Kontaktstruktur 310auftreten, entstehen an den jeweiligen Kontaktstrukturen 310 bzw. an den Rändern des Statormoduls 300 Bereiche, in denen eine exakte Bestimmung des Orientierungsmagnetfelds durch die Magnetfeldsensoreinrichtung 424 nicht gewährleistet werden kann. Diese Bereiche sind den Figuren 8a bis 8c durch die senkrechten bzw. waagrechten strichlinierten Ellipsen dargestellt.

In den Figuren 8a bis 8c ist ausschließlich ein Statormodul 300 dargestellt. Für einen Betrieb eines Planarantriebssystems 200 werden für gewöhnlich jedoch eine Mehrzahl von Statormodulen 300 zu einer großflächigen Antriebsfläche des Planarantriebssystems 200 zusammen angeordnet. Für den Betrieb des Läufers 400 auf den mehreren Statormodulen 300 besteht in der Ausführungsform der Fig. 8a, in der ein einzelner 2D/3D-Hallsensor 427 im geometrischen Zentrum 445 des Läufers 400 angeordnet ist, die Problematik, dass bei Überquerung des Läufers 400 der Kontaktstrukturen 310 bzw. der Ränder der einzelnen Statormodule 300 der einzelne 2D/3D-Hallsensor 427 in die mit den strichlinierten Ellipsen gekennzeichneten Bereiche, in denen aufgrund der vorherrschenden Randeffekte keine eindeutige Bestimmung des Orientierungsmagnetfelds ermöglicht ist, eintritt, sodass gegebenenfalls keine eindeutigen Bestimmungen des Orientierungsmagnetfelds und damit verbunden keine eindeutigen Bestimmungen der Orientierung des Läufers 400 relativ zum Statormodul 300 bereitgestellt werden können.

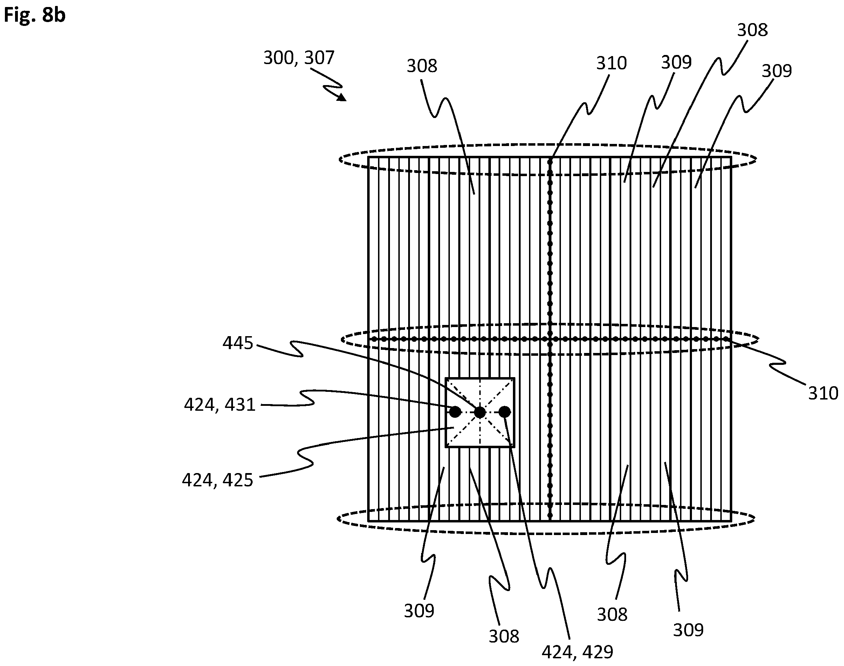

Fig. 8b zeigt eine weitere schematische Darstellung eines Läufers 400 und eines Statormoduls gemäß einer weiteren Ausführungsform.

In der Ausführungsform der Fig. 8b umfasst die Magnetfeldsensoreinrichtung 424 abweichend zu der Ausführungsform in Fig. 8a einen ersten 2D/3D-Hallsensor 429 und einen zweiten 2D/3D-Hallsensor 431, die beabstandet zueinander an gegenüberliegenden Rändern der Läuferleiterplatte 425 angeordnet sind. Eine Verbindungslinie zwischen den beiden 2D/3D-Hallsensoren verläuft durch das geometrische Zentrum 445 des Läufers 400. Eine derartige Anordnung der beiden ersten und zweiten 2D/3D-Hallsensoren führt dazu, dass die Randeffekte an den beiden seitlichen Rändern des dargestellten Statormoduls 300 für eine Bestimmung des Orientierungsmagnetfelds durch den ersten 2D/3D-Hallsensor 429 und den zweiten 2D/3D-Hallsensor 431 bzw. durch die Magnetfeldsensoreinrichtung 424 zu keinen negativen Effekten führen. Dies kann dadurch erreicht werden, dass bei einer Rechts-Links-Bewegung des Läufers 400 über die rechte bzw. linke Kante des in der Fig. 8b dargestellten Statormoduls 300 bzw. über die in der Fig. 8b senkrecht angeordneten Kanten des Statormoduls und der senkrechten Kontaktstruktur 310 in jeder Stellung des Läufers 400 relativ zum Statormodul 300 jeweils einer der beiden 2D/3D-Hallsensoren außerhalb des Bereichs angeordnet ist, in dem aufgrund der Randeffekte eine eindeutige Bestimmung des Orientierungsmagnetfelds nicht möglich ist. Dieser Effekt ist in Fig. 8b durch das Auslassen der senkrecht angeordneten strichlinierten Ellipsen dargestellt, wodurch demonstriert ist, dass durch die in Fig. 8b dargestellten Anordnungen der 2D/3D-Hallsensoren die Randeffekte der senkrecht orientierten Ränder bzw. Kontaktstrukturen 310 kompensiert werden können.

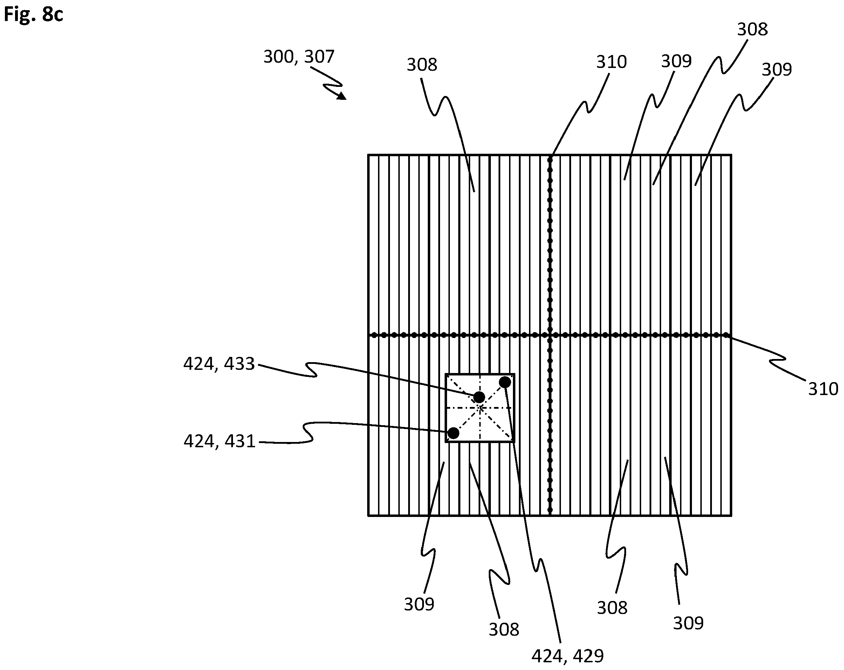

Fig. 8c zeigt eine weitere schematische Darstellung eines Läufers 400 und eines Statormoduls 300 gemäß einer weiteren Ausführungsform.

In der Ausführungsform in Fig. 8c weist die Magnetfeldsensoreinrichtung 424 einen ersten 2D/3D-Hallsensor 429, einen zweiten 2D/3D-Hallsensor 431 und einen dritten 2D/3D-Hallsensor 433 auf, die in einer dreieckigen Anordnung angeordnet sind. Durch die in Fig. 8c dargestellte Anordnung der drei 2D/3D-Hallsensoren wird erreicht, dass für jegliche Positionierung des Läufers 400 relativ zum Statormodul 300 jeweils mindestens einer der drei 2D/3D-Hallsensoren der Magnetfeldsensoreinrichtung 424 außerhalb der in Fig. 8a strichliniert dargestellten Bereiche, in denen aufgrund der Randeffekte eine eindeutige Bestimmung des Orientierungsmagnetfelds für in diesen Bereichen angeordnete Magnetfeldsensoren 501 nicht ermöglicht ist, angeordnet ist. Die in Fig. 8c dargestellte Anordnung der drei 2D/3D-Hallsensoren ermöglicht somit für jegliche Positionierung des Läufers 400 auf dem Statormodul 300 eine eindeutige Bestimmung des Orientierungsmagnetfelds durch die Magnetfeldsensoreinrichtung 424. Abweichend zu der in Fig. 8c dargestellten Anordnung kann eine alternative dreieckige Anordnung der drei 2D/3D-Hallsensoren ebenfalls zu dem beschriebenen Effekt führen.

Alternativ kann die Magnetfeldsensoreinrichtung 424 mit einer beliebigen Anzahl von 2D/3D-Hallsensoren ausgestattet sein.

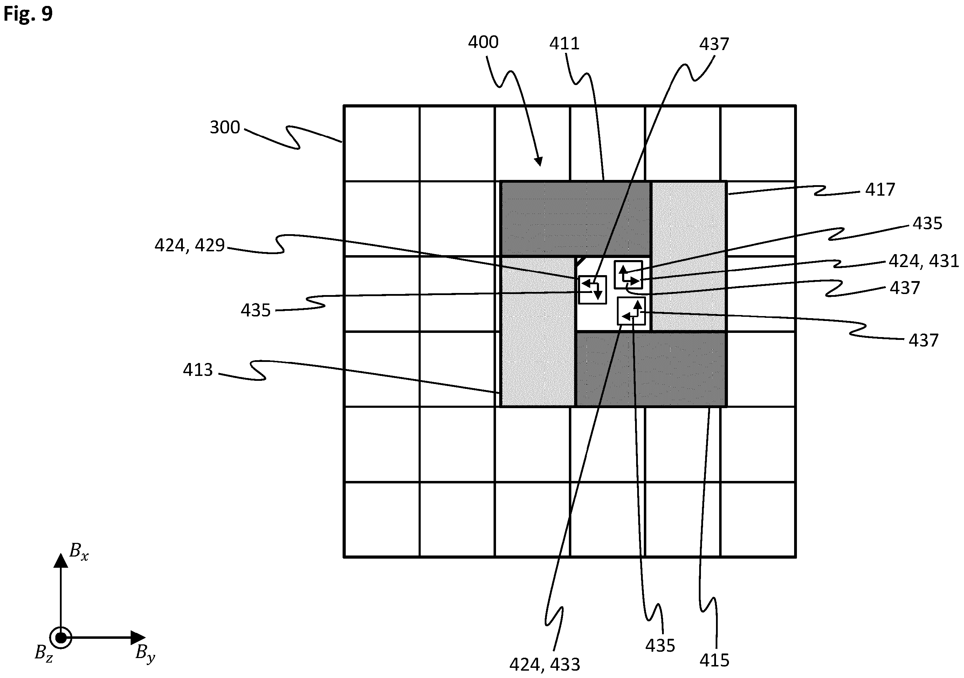

Fig. 9 zeigt eine weitere schematische Darstellung eines Läufers 400 und eines Statormoduls 300 gemäß einer weiteren Ausführungsform.

Fig. 9 zeigt ein Statormodul 300 mit einem Läufer 400. Der Läufer 400 ist auf die vier Magneteinheiten 411, 413, 415, 417 und die Magnetfeldsensoreinrichtung 424, umfassend einen ersten 2D/3D-Hallsensor 429, einen zweiten 2D/3D-Hallsensor 431 und einen dritten 2D/3D-Hallsensor 433, reduziert.

Der erste Messkanal 435 des ersten 2D/3D-Hallsensors 429 ist in der Ausführungsform in Fig. 9 antiparallel zur x-Komponente Bx des Magnetfelds des Statormoduls 300 angeordnet. Der zweite Messkanal 437 des ersten 2D/3D-Hallsensors 429 ist ferner antiparallel zur y-Komponente By des Magnetfelds des Statormoduls 300 angeordnet. Je nach Ausrichtung des Orientierungsmagnetfelds entlang der x-Komponente Bx bzw. der y-Komponente By können somit in der in Fig. 9 gezeigten Orientierung des Läufers 400 relativ zum Statormodul 300 über die entsprechenden ersten oder zweiten Messkanäle 435, 437 der ersten bis dritten 2D/3D-Hallsensoren 429, 431, 433 entsprechende Komponenten des Orientierungsmagnetfelds bestimmt werden.

Durch eine Änderung der Orientierung des Läufers 400 relativ zum Statormodul 300, beispielsweise durch eine Rotation um die Rotationsachse (in Fig. 9 nicht dargestellt) ändern sich die durch die ersten Messkanäle 435 bzw. zweiten Messkanäle 437 der ersten bis dritten 2D/3D-Hallsensoren 429, 431, 433 aufgenommenen Werte, sodass auf Basis der Änderungen der einzelnen Messwerte des Orientierungsmagnetfelds der ersten bis dritten 2D/3D-Hallsensoren 429, 431, 433 eine Orientierung des Läufers 400 relativ zum Statormodul 300 ermittelt werden kann. Hierzu können die für verschiedene Orientierungen durch die 2D/3D-Hallsensoren 429, 431, 433 aufgenommenen Messwerte mit entsprechenden Messwerten, die für verschiedene Orientierungen des Läufers 400 relativ zum Statormodul 300 als Referenzwerte aufgenommen und in einer Look-up Tabelle gespeichert wurden, verglichen werden. Über die Vergleiche der aufgenommenen Messwerte mit den in der Look-up Tabelle gespeicherten Referenzwerte können entsprechende Orientierungen des Läufers 400 relativ zum Statormodul 300 bestimmt werden, indem die Werte der Look-up Tabelle bestimmt werden, die die geringste Abweichung von den aufgenommenen Messwerten des Orientierungsmagnetfelds aufweisen, und die entsprechenden Orientierungen bestimmt werden, die in der Look-up Tabelle den ausgewählten Werten des Orientierungsmagnetfelds zugeordnet sind.

Die drei 2D/3D-Hallsensoren sind ferner derart angeordnet, dass Messkanäle der einzelnen Hall-Sensoren parallel oder antiparallel zueinander ausgerichtet sind. In der in Fig. 9 dargestellten Ausführungsform ist beispielsweise der erste Messkanal 435 des ersten 2D/3D-Hallsensors 429 antiparallel zum ersten Messkanal 435 des zweiten 2D/3D-Hallsensors 431 und zum zweiten Messkanal 437 des dritten 2D/3D-Hallsensors 433 angeordnet. Demzufolge ist der zweite Messkanal 437 des ersten 2D/3D-Hallsensors 429 parallel zum ersten Messkanal 435 des dritten 2D/3D-Hallsensors 433 und antiparallel zum zweiten Messkanal 437 des zweiten 2D/3D-Hallsensors 431 angeordnet.

Durch eine derartige Anordnung, in der die Messkanäle der einzelnen Hall-Sensoren parallel oder antiparallel zueinander ausgerichtet sind, können einzelne durch die verschiedenen Hall-Sensoren aufgenommenen Messwerte des Orientierungsmagnetfelds zur Bestimmung des Orientierungsmagnetfelds herangezogen werden.

Alternativ können die 2D/3D Hall-Sensoren auch abweichend zu der in Fig. 9 gezeigten Anordnung am Läufer 400 angeordnet sein, sodass die Messkanäle der einzelnen Hall-Sensoren beliebig parallel oder antiparallel zueinander ausgerichtet sind.

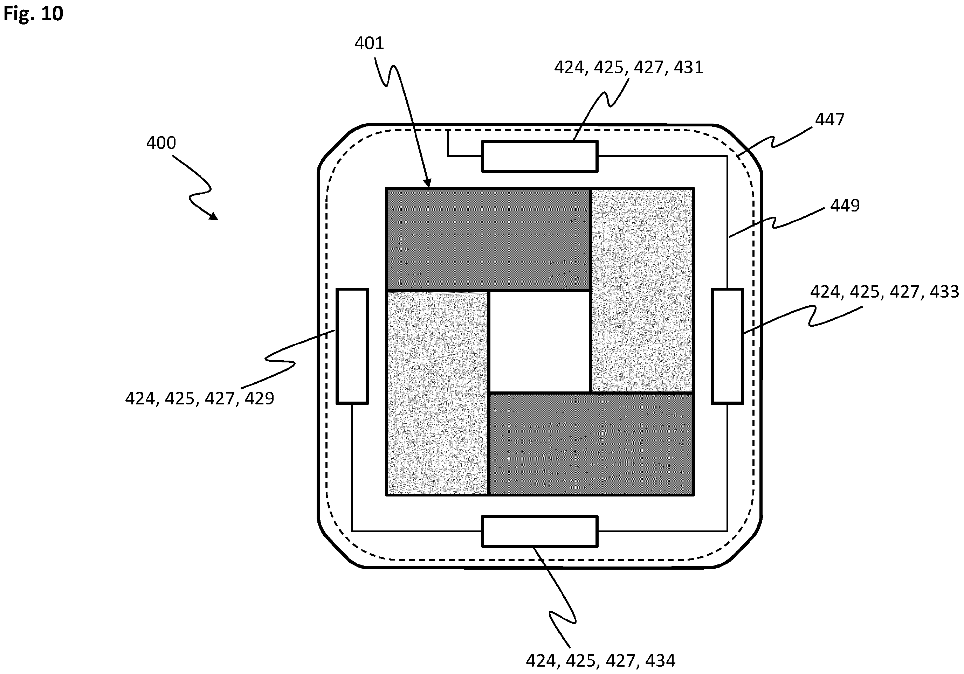

Fig. 10 zeigt eine weitere schematische Darstellung eines Läufers 400 gemäß einer weiteren Ausführungsform.

In der Ausführungsform in Fig. 10 umfasst die Magnetfeldsensoreinrichtung 424 vier 2D/3D-Hallsensoren 427, einen ersten 2D/3D-Hallsensor 429, einen zweiten 2D/3D-Hallsensor 431, einen dritten 2D/3D-Hallsensor 433 und einen vierten 2D/3D-Hallsensor 434, die nicht im Zentrum der Magnetanordnung 401, wie in der Ausführungsform in Fig. 9, sondern in einem die Magnetanordnung 401 lateral umgebenden Bauraum des Läufers 400 angeordnet sind. In der Ausführungsform in Fig. 10 sind die vier 2D/3D-Hallsensoren 427 jeweils individuell auf einer Läuferleiterplatte 425 angeordnet. In der Ausführungsform in Fig. 10 sind die vier 2D/3D-Hallsensoren 427 jeweils an einer Seite des Läufers 400 angeordnet. Eine andere Anordnung wäre jedoch ebenfalls möglich.

In der Ausführungsform in Fig. 10 sind die vier 2D/3D-Hallsensensoren 427 über eine Verkabelung 449 miteinander verbunden.

Die Ausrichtung der einzelnen Messkanäle der 435, 437, 439 der 2D/3D-Hallsensoren 427 ist in Fig. 10 nicht gezeigt. Analog zu der Ausführungsform in Fig. 9 können die 2D/3D-Hallsensoren 427 derart angeordnet sein, dass die Messkanäle 435, 437, 439 verschiedener 2D/3D-Hallsensoren 427 jeweils parallel oder antiparallel zueinander ausgerichtet sind. Eine andere Ausrichtung der Messkanäle 435, 437, 439 ist jedoch ebenfalls möglich.

Die 2D/3D-Hallsensoren 427 können beispielsweise in einem Stoßfänger (nicht gezeigt) des Läufers 400 angeordnet sein, der den Läufer 400 lateral umgibt und Stöße mit anderen Läufern 400 oder Hindernissen abfängt. Alternativ zu der in Fig. 10 gezeigten Ausführungsform kann die Magnetfeldsensoreinrichtung 424 eine andere Anzahl von 2D/3D-Hallsensoren 427 umfassen, die in einem oder mehreren Stoßfängern am Randbereich des Läufers 400 angeordnet sind. Insbesondere können die 2D/3D-Hallsensoren 427 auf einer oder einer beliebigen Anzahl von Läuferleiterplatten 425 angeordnet sein.

In der Ausführungsform in Fig. 10 umfasst der Läufer 400 ferner eine Spuleneinheit 447, die für eine Energieübertragung und/oder für eine Kommunikation zwischen dem Läufer 400 und dem Statormodul 300 dienen kann. Die Spuleneinheit 447 kann in einem die Magnetanordnung 401 lateral umgebenden Bauraum des Läufers 400, beispielsweise in den Stoßfängern, platziert sein. Alternativ kann die Spuleneinheit 447 als gedruckte Spule auf der Läuferleiterplatte 425 der Magnetfeldsensoreinrichtung 424 selbst ausgebildet sein.

Die 2D/3D-Hallsesensoren 427 können über die Verkabelung 449 mit der Spuleneinheit 447 verbunden sein.

Die Magnetanordnung 401 kann entgegen der Darstellung in Fig. 10 auch so ausgebildet sein, dass im Zentrum der Magnetanordnung 401 keine Freifläche ausgebildet ist. Vorteile sind hierbei, dass ohne Freifläche in der Mitte des Läufers 400 die Abmessungen des Läufers 400 kleiner ausgebildet werden können und somit mehr Läufer 400 auf einer bestimmten Statoroberfläche 303 genutzt werden können.

Des Weiteren kann durch eine Ausführung der Spuleneinheit 447 entsprechend der Fig. 10 eine höhere elektrische Leistung übertragen werden und ein größerer Abstand zwischen dem Läufer 400 und dem Statormodul 300 während der Energie- und Datenübertragung eingehalten werden, als bei der Ausführungsform als gedruckte Spule auf der Läuferleiterplatte 425 entsprechend der Platzierung der Läuferleiterplatte 425 im Zentrum der Magnetanordnung 401 entsprechend der Fig. 6. So kann eine Energie-und Datenübertragung auch während des normalen Betriebes des Planarantriebssystems 200 durchgeführt werden, beispielsweise während der Läufer 400 angetrieben wird.

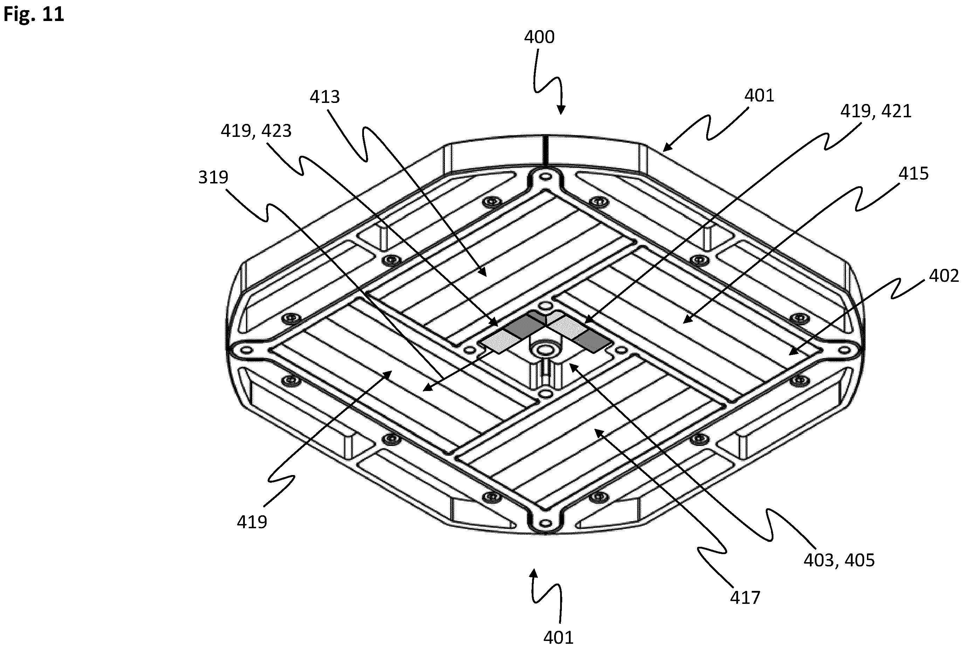

Fig. 11 zeigt eine weitere schematische Darstellung einer Unterseite eines Läufers 400 gemäß einer weiteren Ausführungsform.

In Fig. 11 ist der Läufer 400 aus Fig. 3 dargestellt, wobei in der Ausführungsform in Fig. 11 die Magneteinrichtung 419 in Form eines ersten Permanentmagneten 421 und eines zweiten Permanentmagneten 423 am Läufer 400 ausgebildet ist. In der Ausführungsform in Fig. 11 ist ferner die Magnetfeldvorzugsrichtung 319 durch die Ausrichtung des zweiten Permanentmagneten 423 definiert.

Gemäß der in Fig. 11 gezeigten Ausführungsform ist die Magnetfeldsensoreinrichtung 424 durch die Magnetfeldsensoren 501 des Sensormoduls 500 des Statormoduls 300 (nicht dargestellt) gebildet. Alternativ zu der in Fig. 11 gezeigten Ausführungsform kann die Magneteinrichtung 419 durch eine beliebige Anzahl verschiedener Permanentmagneten realisiert sein. Vorausgesetzt hierfür ist, dass eine Anordnung der beliebigen Anzahl von Permanentmagneten der Magneteinrichtung 419 rotationsasymmetrisch bezüglich einer Rotationsachse 317 senkrecht zur Lauffläche 402 des Läufers 400 ist.

Mittels der rotationsasymmetrischen Anordnung der Permanentmagnete der Magneteinrichtung 419 bezüglich der Rotationsachse 317 kann durch die Magnetfeldsensoren 501 des Sensormoduls 500, die die Magnetfeldsensoreinrichtung 424 bilden, auf Basis des durch die rotationsasymmetrische Anordnung der Permanentmagneten erzeugten rotationsasymmetrischen Orientierungsmagnetfelds eine Orientierung des Läufers 400 relativ zum Statormodul 300 eindeutig ermittelt werden.

### Bezugszeichenliste

- 100: Verfahren zum Steuern eines Planarantriebssystems
- 101: Vorzugsrichtungsidentifikationsschritt
- 103: Magnetfeldstellungsschritt
- 105: Magnetfeldbestimmungsschritt
- 107: Ausrichtungsbestimmungsschritt
- 109: Orientierungsbestimmungsschritt
- 111: Positionsbestimmungsschritt
- 113: Arretierschritt
- 115: Orientierungsschritt
- 117: Bestimmungsschritt
- 119: Relationsbestimmungsschritt
- 121: Vergleichsschritt
- 123: Messschritt
- 125: Simulationsschritt

- 200: Planarantriebssystem
- 201: Steuereinheit
- 203: Datenverbindung

- 300: Statormodul
- 301: Träger
- 303: Statoroberfläche
- 305: Statormodulgehäuse
- 307: Statoreinheit
- 308: Statorsegment
- 309: Statorleiter
- 310: Kontaktstruktur
- 311: Statorleiterzwischenraum
- 313: Schnittebene
- 315: Statormodulvorzugsrichtung
- 317: Rotationsachse
- 319: Magnetfeldvorzugsrichtung

- 400: Läufer
- 401: Magnetanordnung
- 402: Lauffläche
- 403: Freifläche
- 405: Befestigungsstruktur
- 407: erste Läuferrichtung
- 409: zweite Läuferrichtung
- 411: erste Magneteinheit
- 413: zweite Magneteinheit
- 415: dritte Magneteinheit
- 417: vierte Magneteinheit
- 419: Magneteinrichtung
- 421: erster Permanentmagnet
- 423: zweiter Permanentmagnet
- 424: Magnetfeldsensoreinrichtung
- 425: Läuferleiterplatte
- 427: 2D/3D-Hallsensor
- 429: erster 2D/3D-Hallsensor
- 431: zweiter 2D/3D-Hallsensor
- 433: dritter 2D/3D-Hallsensor
- 434: vierter 2D/3D-Hallsensor
- 435: erster Messkanal
- 437: zweiter Messkanal
- 439: dritter Messkanal
- 441: Läufervorzugsrichtung
- 443: Sensorvorzugsrichtung
- 445: geometrisches Zentrum
- 447: Spuleneinheit
- 449: Verkabelung

- 500: Sensormodul
- 501: Magnetfeldsensor
- 503: erstes periodisches Gitter
- 505: zweites periodisches Gitter
- 507: erste Richtung
- 509: zweite Richtung
- 511: erster Magnetfeldsensor
- 513: zweiter Magnetfeldsensor
- Bx: x-Komponente des Magnetfelds
- By: y-Komponente des Magnetfelds
- Bz: z-Komponente des Magnetfelds

## Patentansprüche

1. Verfahren (100) zum Steuern eines Planarantriebssystems (200), wobei das Planarantriebssystem (200) wenigstens eine Steuereinheit (201), ein Statormodul (300) mit einer Statoroberfläche (303) und einen auf der Statoroberfläche (303) positionierbaren Läufer (400) umfasst, wobei das Statormodul (300) eingerichtet ist, zum elektrischen Steuern des Läufers (400) entlang der Statoroberfläche (303) Statormagnetfelder zu generieren, wobei der Läufer (400) eine Magnetanordnung (401) zum Generieren eines Läufermagnetfelds aufweist, wobei über die Statormagnetfelder und das Läufermagnetfeld eine magnetische Kopplung zwischen dem Läufer (400) und dem Statormodul (300) erzielbar ist, wobei das Statormodul (300) zum Bestimmen einer Position des Läufers (400) ein Sensormodul (500) mit einer Mehrzahl von Magnetfeldsensoren (501) umfasst, wobei das Statormodul (300) oder der Läufer (400) eine Magneteinrichtung (419) zum Generieren eines Orientierungsmagnetfelds aufweist, wobei das Orientierungsmagnetfeld rotationsasymmetrisch bezüglich einer Rotation um eine zur Statoroberfläche (303) senkrechte Rotationsachse (317) ist und eine Magnetfeldvorzugsrichtung (319) aufweist, und wobei der jeweils andere des Statormoduls (300) und des Läufers (400) eine Magnetfeldsensoreinrichtung (424) mit einer Sensorvorzugsrichtung (443) zum Detektieren des Orientierungsmagnetfelds entlang der Sensorvorzugsrichtung (443) aufweist, umfassend:
Identifizieren einer Statormodulvorzugsrichtung (315) des Statormoduls (300) mit der Magnetfeldvorzugsrichtung (319) oder der Sensorvorzugsrichtung (443) und Identifizieren einer Läufervorzugsrichtung (441) des Läufers (400) mit der jeweils anderen der Magnetfeldvorzugsrichtung (319) oder der Sensorvorzugsrichtung (443) in einem Vorzugsrichtungsidentifikationsschritt (101), wobei die Statormodulvorzugsrichtung (315) parallel zur Statoroberfläche (303) des Statormoduls (300) orientiert ist, und
wobei die Läufervorzugsrichtung (441) parallel zu einer Lauffläche (402) des Läufers (400) orientiert ist;
Stellen des Orientierungsmagnetfelds durch die Magneteinrichtung (419) in einem Magnetfeldstellungsschritt (103);
Aufnehmen wenigstens eines Messwerts des Orientierungsmagnetfelds durch die Magnetfeldsensoreinrichtung in einem Magnetfeldbestimmungsschritt (105), wobei der wenigstens eine Messwert des Orientierungsmagnetfelds wenigstens einen Wert einer Komponente des Orientierungsmagnetfelds in einer Richtung parallel zur Sensorvorzugsrichtung (443) umfasst;
Bestimmen einer Ausrichtung der Läufervorzugsrichtung (441) relativ zur Statormodulvorzugsrichtung (315) auf Basis des gemessenen Werts der Komponente des Orientierungsmagnetfels parallel zur Sensorvorzugsrichtung (443) in einem Ausrichtungsbestimmungsschritt (107);
Bestimmen einer ersten Orientierung des Läufers (400) auf dem Statormodul (300) auf Basis der Ausrichtung der Läufervorzugsrichtung (441) relativ zur Statormodulvorzugsrichtung (315) in einem Orientierungsbestimmungsschritt (109), wobei eine erste Orientierung des Läufers (400) relativ zum Statormodul (300) in eine zweite Orientierung des Läufers (400) relativ zum Statormodul (300) über eine Rotation des Läufers (400) relativ zum Statormodul (300) um die senkrecht zur Statoroberfläche (303) orientierte und durch ein geometrisches Zentrum des Läufers (400) verlaufende Rotationsachse (317) überführbar ist.

2. Verfahren (100) nach Anspruch 1, ferner umfassend:
Bestimmen einer Position des Läufers (400) relativ zum Statormodul (300) durch Aufnehmen einer Mehrzahl von Messwerten des Läufermagnetfelds des Läufers (400) durch Magnetfeldsensoren (501) des Sensormoduls (500) des Statormoduls (300) in einem Positionsbestimmungsschritt (111), wobei eine erste Position des Läufers (400) relativ zum Statormodul (300) in eine zweite Position des Läufers (400) relativ zum Statormodul (300) über eine Translation des geometrischen Zentrums des Läufers (400) relativ zum Statormodul (300) in einer zur Rotationsachse (317) senkrecht verlaufenden Translationsrichtung überführbar ist.

3. Verfahren (100) nach Anspruch 1 oder 2, ferner umfassend:
Stellen eines Arretiermagnetfelds durch das Statormodul (300) zum Arretieren des Läufers (400) in einer Position in einem Arretierschritt (113), wobei das Arretiermagnetfeld dem Läufermagnetfeld gegenpolig ausgerichtet ist, sodass eine anziehende magnetische Kopplung zwischen dem Arretiermagnetfeld und dem Läufermagnetfeld erzeugt wird.

4. Verfahren (100) nach einem der voranstehenden Ansprüche, ferner umfassend:
Orientieren des Läufers (400) von der ersten Orientierung in eine zweite Orientierung auf Basis der Ausrichtung der Läufervorzugsrichtung (441) relativ zur Statormodulvorzugsrichtung (315) in einem Orientierungsschritt (115).

5. Verfahren nach einem der voranstehenden Ansprüche, wobei die Magneteinrichtung (419) am Statormodul (300) und die Magnetfeldsensoreinrichtung (4) am Läufer (400) ausgebildet sind, wobei die Statormodulvorzugsrichtung (315) mit der Magnetfeldvorzugsrichtung (319) und die Läufervorzugsrichtung (441) mit der Sensorvorzugsrichtung (443) identifiziert sind, wobei die Magnetfeldsensoreinrichtung (424) wenigstens einen 2D-Hallsensor oder 3D-Hallsensor (427) umfasst, wobei die Sensorvorzugsrichtung (443) der Magnetfeldsensoreinrichtung (424) durch einen Messkanal des Hallsensors definiert ist, und wobei die Magneteinrichtung (419) durch eine Statoreinheit des Statormoduls (300) zum Generieren der Statorfelder zum Antreiben des Läufers (400) gebildet ist.

6. Verfahren (100) nach Anspruch 5, ferner umfassend:
Bestimmen einer Mehrzahl von Werten des Orientierungsmagnetfelds für eine Mehrzahl verschiedener Ausrichtungen der Läufervorzugsrichtung (441) relativ zur Statormodulvorzugsrichtung (315) in einem Bestimmungsschritt (117); und
Bestimmen einer Relation zwischen einem Wert des Orientierungsmagnetfelds und einer Ausrichtung der Läufervorzugsrichtung (441) relativ zur Statormodulvorzugsrichtung (315) auf Basis der Mehrzahl von Werten des Orientierungsmagnetfelds für die Mehrzahl verschiedener Ausrichtungen der Läufervorzugsrichtung (441) relativ zur Statormodulvorzugsrichtung (315) in einem Relationsbestimmungsschritt (119);
wobei der Ausrichtungsbestimmungsschritt (107) umfasst: Vergleichen des gemessenen Werts der Komponente des Orientierungsmagnetfelds parallel zur Sensorvorzugsrichtung (443) mit der Relation zwischen dem Wert des Orientierungsmagnetfels und der Ausrichtung der Läufervorzugsrichtung (441) relativ zur Statormodulvorzugsrichtung (315) in einem Vergleichsschritt (121).

7. Verfahren (100) nach Anspruch 6, wobei der Bestimmungsschritt (117) umfasst:
Aufnehmen einer Mehrzahl von Messwerten von Komponenten des Orientierungsmagnetfelds parallel zu Sensorvorzugsrichtungen (443) der Magnetfeldsensoreinrichtung (424) für eine Mehrzahl verschiedener Ausrichtungen der Läufervorzugsrichtung (441) relativ zur Statormodulvorzugsrichtung (315) durch die Magnetfeldsensoreinrichtung (424) in einem Messschritt (123); oder
Berechnen der Mehrzahl von Werten von Komponenten des Orientierungsmagnetfelds parallel zu Sensorvorzugsrichtungen (443) der Magnetfeldsensoreinrichtung (424) für die Mehrzahl verschiedener Ausrichtungen der Läufervorzugsrichtung (441) relativ zur Statormodulvorzugsrichtung (315) auf Basis einer Modellbeschreibung des Orientierungsmagnetfelds in einem Simulationsschritt (125).

8. Verfahren nach Anspruch 6 oder 7, wobei das Vergleichen im Vergleichsschritt (121) über ein Näherungsverfahren durchgeführt wird.

9. Verfahren nach einem der voranstehenden Ansprüche 5 bis 8, wobei der Läufer (400) ferner eine Übertragungseinheit aufweist, die eingerichtet ist, die im Magnetfeldbestimmungsschritt (105) aufgenommenen Messwerte des Orientierungsmagnetfelds an die Steuereinheit (201) zu übertragen, und wobei der Ausrichtungsbestimmungsschritt (107) und der Orientierungsbestimmungsschritt (109) durch die Steuereinheit (201) ausgeführt werden.

10. Verfahren nach einem der voranstehenden Ansprüche 5 bis 9, wobei der Läufer (400) ferner eine Prozessoreinheit, die eingerichtet ist, den Ausrichtungsbestimmungsschritt (107) und den Orientierungsbestimmungsschritt (109) durchzuführen, und eine Übertragungseinheit aufweist, die eingerichtet ist, die im Ausrichtungsbestimmungsschritt (107) bestimmte Ausrichtung und/oder die im Orientierungsbestimmungsschritt (109) bestimmte Orientierung an die Steuereinheit (201) zu übertragen.

11. Verfahren nach einem der voranstehenden Ansprüche 5 bis 10, wobei die Magnetfeldsensoreinrichtung (424) des Läufers (400) eine Mehrzahl von 2D-Hallsensoren oder eine Mehrzahl von 3D-Hallsensoren umfasst, wobei Messkanäle der 2D- oder 3D-Hallsensoren jeweils parallel oder antiparallel zueinander am Läufer (400) angeordnet sind.

12. Verfahren nach Anspruch 11, wobei die Magnetfeldsensoreinrichtung (424) des Läufers (400) zwei 2D-Hallsensoren oder 3D-Hallsensoren umfasst, wobei die zwei 2D-Hallsensoren oder 3D-Hallsensoren beabstandet zu einander am Läufer (400) angeordnet sind, und wobei eine Verbindungslinie zwischen den zwei 2D-, 3D-Hallsensoren durch ein geometrisches Zentrum der Lauffläche des Läufers (400) verläuft.

13. Verfahren nach Anspruch 11, wobei die Magnetfeldsensoreinrichtung (424) des Läufers (400) drei 2D-Hallsensoren oder 3D-Hallsensoren umfasst, wobei die drei 2D-Hallsensoren oder 3D-Hallsensoren beabstandet zu einander am Läufer (400) angeordnet sind und eine dreieckige Anordnung bilden, und wobei ein geometrisches Zentrum der Lauffläche des Läufers auf einer Fläche der durch die drei 2D-Hallsensoren oder 3D-Hallsensoren gebildeten dreieckigen Anordnung oder auf einer Verbindungslinie zwischen zwei der drei 2D-, 3D-Hallsensoren angeordnet ist.

14. Verfahren nach einem der voranstehenden Ansprüche 1 bis 4, wobei die Magneteinrichtung (419) am Läufer (400) und die Magnetfeldsensoreinrichtung (424) am Statormodul (300) ausgebildet sind, wobei die Statormodulvorzugsrichtung (315) mit der Sensorvorzugsrichtung (443) und die Läufervorzugsrichtung (441) mit der Magnetfeldvorzugsrichtung (319) identifiziert sind, wobei die Magnetfeldsensoreinrichtung (424) wenigstens einen Magnetfeldsensor (501) des Sensormoduls (500) des Statormoduls (300) umfasst, wobei der wenigstens eine Magnetfeldsensor (501) als ein 2D-Hallsensor oder 3D-Hallsensor ausgebildet ist, wobei die Sensorvorzugsrichtung (443) der Magnetfeldsensoreinrichtung (424) durch einen der Messkanäle des Hallsensors definiert ist, wobei die Magneteinrichtung (419) als wenigstens ein Permanentmagnet ausgebildet ist, und wobei die Magnetfeldvorzugsrichtung (319) durch einen Nordpol und einen Südpol des Permanentmagneten gebildet ist.

15. Planarantriebssystem (200) mit wenigstens einer Steuereinheit (201), einem Statormodul (300) mit einer Statoroberfläche (303) und einem auf der Statoroberfläche (303) positionierbaren Läufer (400), wobei das Statormodul (300) eingerichtet ist, zum elektrischen Steuern des Läufers (400) entlang der Statoroberfläche (303) Statormagnetfelder zu generieren, wobei der Läufer (400) eine Magnetanordnung (401) zum Generieren eines Läufermagnetfelds aufweist, wobei über die Statormagnetfelder und das Läufermagnetfeld eine magnetische Kopplung zwischen dem Läufer (400) und dem Statormodul (300) erzielbar ist, wobei das Statormodul (300) zum Bestimmen einer Position des Läufers (400) ein Sensormodul (500) mit einer Mehrzahl von Magnetfeldsensoren (501) umfasst, wobei das Statormodul (300) oder der Läufer (400) eine Magneteinrichtung (419) zum Generieren eines Orientierungsmagnetfelds aufweist, wobei das Orientierungsmagnetfeld rotationsasymmetrisch bezüglich einer Rotation um eine zur Statoroberfläche (303) senkrechte Rotationsachse (317) ist und eine Magnetfeldvorzugsrichtung (319) aufweist, und wobei der jeweils andere des Statormoduls (300) und des Läufers (400) eine Magnetfeldsensoreinrichtung (424) mit einer Sensorvorzugsrichtung (443) zum Detektieren des Orientierungsmagnetfelds entlang der Sensorvorzugsrichtung (443) aufweist, und wobei das Planarantriebssystem (200) ausgebildet ist, das Verfahren (100) nach einem der voranstehenden Ansprüche 1 bis 14 auszuführen.
